# EUROPEAN PATENT SPECIFICATION

(11) **EP 4 445 664 B1**
(45) Date of publication and mention of the grant of the patent: **23.07.2025**
(21) Application number: 22814204.8
(22) Date of filing: 22.11.2022
(51) Int. Cl.: H04W 56/00, H04W 24/10, H04W 48/10, H04W 48/12

(54) **CONFIGURING CELL GROUPS IN WHICH REFERENCE SIGNALS ARE NOT TRANSMITTED BY ALL CELLS**
KONFIGURATION VON ZELLGRUPPEN, IN DENEN DURCH ALLE ZELLEN NICHT REFERENZSIGNALE ÜBERTRAGEN WERDEN
CONFIGURATION DE GROUPES DE CELLULES DANS LESQUELS DES SIGNAUX DE RÉFÉRENCE NE SONT PAS ÉMIS PAR TOUTES LES CELLULES

(30) Priority: 09.12.2021 US 202163287712 P
(43) Date of publication of application: 16.10.2024
(73) Proprietor: Telefonaktiebolaget LM Ericsson (publ), 164 83 Stockholm (SE)
(72) Inventor: BERGSTRÖM, Mattias, 192 70 Sollentuna (SE); KAZMI, Muhammad Ali, 174 64 Sundbyberg (SE)
(74) Representative: Ericsson
(86) International application number: PCT/SE2022/051083
(87) International publication number: WO 2023/106982

(56) References cited:
- WO-A2-2020/215108
- US-A1- 2021 045 075
- HUAWEI ET AL: "Discussion on CSI-RS based L3 measurement requirements", vol. RAN WG4, no. Online Meeting ;20200420 - 20200430, 10 April 2020 (2020-04-10), XP051872808, Retrieved from the Internet <URL:https://ftp.3gpp.org/tsg_ran/WG4_Radio/TSGR4_94_eBis/Docs/R4-2004292.zip R4-2004292.doc> [retrieved on 20200410]

## Description

### TECHNICAL FIELD

The present disclosure relates generally to wireless networks and mores specifically to techniques that reduce the need for transmission of reference signals to wireless devices operating in a wireless network.

### BACKGROUND

Long-Term Evolution (LTE) is an umbrella term for so-called fourth generation (4G) radio access technologies developed within the Third-Generation Partnership Project (3GPP) and initially standardized in Release 8 (Rel-8) and Release 9 (Rel-9), also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases.

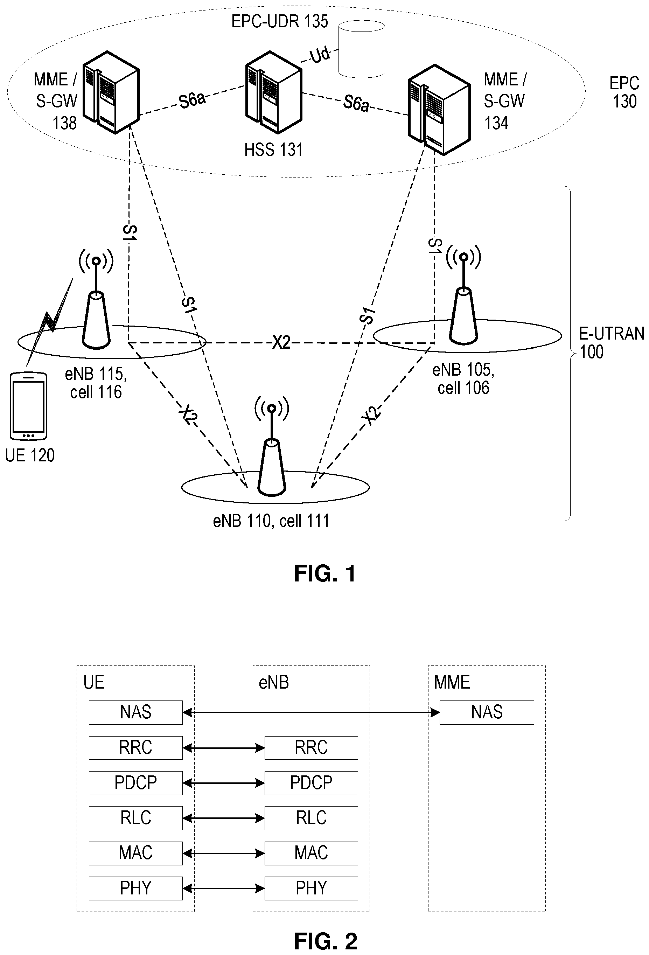

An overall exemplary architecture of a network comprising LTE and SAE is shown in Figure 1. E-UTRAN 100 includes one or more evolved Node B's (eNB), such as eNBs 105, 110, and 115, and one or more user equipment (UE), such as UE 120. As used within the 3GPP standards, "user equipment" or "UE" means any wireless communication device (e.g., smartphone or computing device) that can communicate with 3GPP-standard-compliant network equipment, including E-UTRAN as well as UTRAN and/or GERAN, as the third generation ("3G") and second-generation ("2G") 3GPP RANs are commonly known.

As specified by 3GPP, E-UTRAN 100 is responsible for all radio-related functions in the network, including radio bearer control, radio admission control, radio mobility control, scheduling, and dynamic allocation of resources to UEs in uplink (UL, i.e., UE to network) and downlink (DL, i.e., network to UE), as well as security of the communications with the UE. These functions reside in the eNBs, such as eNBs 105, 110, and 115. Each eNB can serve a geographic coverage area that includes one more cells, e.g., cells 106, 111, and 115 served by eNBs 105, 110, and 115, respectively.

The eNBs in the E-UTRAN communicate with each other via the X2 interface, as shown in Figure 1. The eNBs also are responsible for the E-UTRAN interface to the EPC 130, specifically the S1 interface to the Mobility Management Entity (MME) and the Serving Gateway (SGW), shown collectively as MME/S-GWs 134 and 138 in Figure 1. In general, the MME/S-GW handles both the overall control of the UE and data flow between the UE and the rest of the EPC. More specifically, the MME processes the signaling (*e.g.,* control plane) protocols between the UE and the EPC, which are known as the Non-Access Stratum (NAS) protocols. The S-GW handles all Internet Protocol (IP) data packets (*e.g.,* data or user plane) between the UE and the EPC and serves as the local mobility anchor for the data bearers when the UE moves between eNBs, such as eNBs 105, 110, and 115.

EPC 130 can also include a Home Subscriber Server (HSS) 131, which manages user- and subscriber-related information. HSS 131 can also provide support functions in mobility management, call and session setup, user authentication and access authorization. The functions of HSS 131 can be related to the functions of legacy Home Location Register (HLR) and Authentication Centre (AuC) functions or operations. HSS 131 can also communicate with MMEs 134 and 138 via respective S6a interfaces. In some embodiments, HSS 131 can communicate with a user data repository (UDR) - labelled EPC-UDR 135 in Figure 1 - via a Ud interface. EPC-UDR 135 stores user credentials after encryption by AuC algorithms.

Currently the fifth generation ("5G") of cellular systems, also referred to as New Radio (NR), is being standardized within 3GPP. NR is developed for maximum flexibility to support a variety of different use cases. These include enhanced mobile broadband (eMBB), machine type communications (MTC), ultra-reliable low latency communications (URLLC), side-link device-to-device (D2D), and other use cases. 5G/NR technology shares many similarities with fourth-generation LTE. For example, both PHYs arrange time-domain physical resources into 1-ms subframes that include multiple slots of equal duration, with each slot including multiple OFDM-based symbols.

In addition to providing coverage via "cells," as in LTE, NR networks also provide coverage via "beams." In general, a DL "beam" is a coverage area of a network-transmitted RS that may be measured or monitored by a UE. Such RS can include any of the following, alone or in combination: SS/PBCH block (SSB), channel state information RS (CSI-RS), tertiary reference signals (or any other sync signal), positioning RS (PRS), demodulation RS (DMRS), phase-tracking reference signals (PTRS), *etc.* In general, SSB is available to all UEs regardless of radio resource control (RRC) state, while other RS (*e.g.,* CSI-RS, DMRS, PTRS) are associated with specific UEs that have a network connection.

### SUMMARY

It has been discussed within 3GPP to support cells without SSBs, e.g., in inter-band carrier aggregation (CA). For example, an SSB of a cell in one frequency band can be a source of timing/frequency synchronization ("reference cell", RC) for a cell without SSB in another frequency band.

However, it is unclear how UEs should use the RC SSBs for cells that don't have SSBs. It is also unclear how the network knows and/or controls which cell(s) a UE can use as RC(s) and which non-SSB (or SSB-less) cells are linked to those RC(s). Furthermore, it is unclear how the network ensures that a UE always has a valid synchronization source for a cell used by the UE for communication, even if the cell is SSB-less.

The invention is set out in the claims.

Embodiments of the present disclosure provide specific improvements to wireless networks that includes SSB-less cells, such as by facilitating solutions to overcome exemplary problems summarized above and described in more detail below.

Embodiments of the present disclosure include methods (e.g., procedures) for a UE configured to communicate with a RAN via a plurality of serving cells.

These exemplary methods can include determining a reference cell group (RCG) from the plurality of serving cells. The RCG includes one of the serving cells as a reference cell (RC) and one or more other of the serving cells as auxiliary cells. These exemplary methods can also include receiving a first reference signal (RS) from the RC, wherein the first RS is not received by the UE from the one or more auxiliary cells. These exemplary methods can also include performing one or more operations in the one or more auxiliary cells based on the first RS received from the RC.

In some embodiments, performing the one or more operations can include one or more of the following operations:
- synchronizing with the one or more auxiliary cells based on the first RS;
- performing measurements on the one or more auxiliary cells based on the first RS; and
- transmitting and/or receiving signals in the one or more auxiliary cells based on the first RS.

In some embodiments, determining the RCG can include one or more of the following:
- receiving at least part of a configuration for the RCG from a RAN node that provides at least one of the serving cells; and
- determining at least part of the configuration for the RCG based on one or more of the following: one or more UE capabilities, and one or more rules for selecting serving cells comprising an RCG.

In some of these embodiments, the received at least part of the configuration includes one or more of the following:
- an identifier of the RC;
- respective identifiers of the one or more auxiliary cells;
- respective identifiers of the serving cells comprising the RCG; and
- an identifier of the RCG.

In some of these embodiments, these exemplary methods can also include sending to the RAN node an indication of one or more of the following UE capabilities:
- maximum difference between a carrier frequency of a RC and respective carrier frequencies of auxiliary cells of an RCG;
- maximum number of concurrently configured RCGs (Nmax);
- maximum number of serving cells per configured RCG (Smax);
- maximum number of serving cells in all configured RCGs (Stot); and
- a relation between Nmax and Smax.
The received at least a part of the configuration can be based on the indicated UE capabilities.

In some of these embodiments, the rules include one or more of the following criteria for selecting the serving cells comprising the RCG:
- on adjacent carrier frequencies;
- on non-adjacent carrier frequencies;
- having the same bandwidth;
- having different bandwidths that meet one or more bandwidth criteria;
- using the same numerology or sub-carrier spacing (SCS);
- using different numerologies or SCS that meet one or more numerology or SCS criteria;
- in the same frequency band;
- in different frequency bands that meet one or more band criteria;
- in the same frequency range (FR);
- in different FRs that meet one or more range criteria;
- provided from the same physical location or being quasi-co-located (QCL);
- having the same or similar sizes;
- one or more serving cell timing relationships;
- one or more relationships between serving cell transmission power;
- support for common beam management;
- being part of the same multi-connectivity cell group; and
- using the same or different duplexing modes.

In some of these embodiments, the rules include one or more of the following criteria for selecting the RC for the RCG:
- a default serving cell;
- a serving cell having a maximum UE received signal strength or quality;
- a serving cell having a UE received signal strength or quality above a threshold;
- a relationship among carrier frequencies or frequency bands of the serving cells; and
- RS transmission configuration of the serving cells.
In some variants, the default serving cell is one of the following: a PCell; a PSCell; or an SpCell with capability to receive PUCCH.

In some of these embodiments, these exemplary methods can also include sending to the RAN node information identifying the at least part of the configuration for the RCG that was determined by the UE. For example, the information sent to the RAN node can include one or more of the following:
- an identifier of the RC;
- respective identifiers of the one or more auxiliary cells;
- respective identifiers of the serving cells comprising the RCG; and
- an identifier of the RCG.

In some embodiments, these exemplary methods can also include selecting a new RC based on determining that the RC is invalid. The new RC is selected from a list of candidate serving cells based on one or more of the following criteria: randomly, candidate serving cell having the lowest or highest index, or RS transmission configuration of the candidate serving cells. In some of these embodiments, determining that the RC is invalid can be based on one or more of the following:
- receiving a deactivation command for the RC (e.g., from the RAN node);
- expiration of a deactivation timer associated with the RC;
- RC remaining deactivated for at least a first duration;
- UE received signal strength or quality for the RC less than a threshold for at least a second duration;
- one or more UE radio link problems on the RC;
- difference between UE receive timing of signals from the RC and from at least one auxiliary cell exceeds a threshold;
- difference between UE transmit timing of signals to the RC and to at least one auxiliary cell exceeds a threshold; and
- when a number of downlink (DL) or uplink (UL) clear channel assessment (CCA) failures by the UE in the RC exceeds a threshold during a third duration.

In some of these embodiments, these exemplary methods can also include, upon expiration of the deactivation timer associated with the RC, refraining from deactivating the RC when least one of the auxiliary cells of the RCG is activated.

In some of these embodiments, these exemplary methods can also include pausing communication with the auxiliary cells of the RCG in response to selecting the new RC and resuming communication with the auxiliary cells after synchronizing with the new RCG.

In some of these embodiments, these exemplary methods can also include performing a random access (RA) in response to determining that the RC is invalid or to selecting the new RC. In some variants, the RA can be performed on one of the following: the RC, an auxiliary cell, or a serving cell not included in the RCG. In some variants, the RA can be performed using resources reserved for indicating an invalid RC or for indicating an RC change.

In some embodiments, these exemplary methods can also include performing one or more of the following operations based on determining that all RC candidates for a first serving cell in the RCG have been deactivated:
- deactivating the first serving cell;
- refraining from transmitting one or more signals to the first serving cell;
- refraining from receiving one or more signals from the first serving cell;
- sending, to the RAN node, an indication that all RC candidates for the first serving cell in the RCG have been deactivated; and
- turning off the UE transmitter towards the first serving cell within a pre-defined duration.

Other embodiments include methods (e.g., procedures) for a RAN node configured to communicate with a UE via a plurality of serving cells.

These exemplary methods can include determining an RCG for the UE. The RCG includes one of the serving cells as a RC and one or more other of the serving cells as auxiliary cells. These exemplary methods can also include causing a first RS to be transmitted by the RC but not by the or more auxiliary cells.

In some embodiments, determining the RCG can include one or more of the following:
- receiving at least part of a configuration for the RCG from the UE; and
- determining at least part of the configuration for the RCG based on one or more of the following: one or more UE capabilities, and one or more rules for selecting serving cells comprising an RCG.

In some of these embodiments, the received at least part of the configuration includes one or more of the following:
- an identifier of the RC;
- respective identifiers of the one or more auxiliary cells;
- respective identifiers of the serving cells comprising the RCG; and
- an identifier of the RCG.

In some of these embodiments, these exemplary methods can also receiving, from the UE, an indication of one or more UE capabilities, which can be any of the UE capabilities summarized above in relation to UE embodiments. The determined at least a part of the configuration can be based on the indicated UE capabilities.

In various embodiments, the rules used by the RAN node can include any of those summarized above for UE selection of the RC and other serving cells for the RCG.

These exemplary methods can also include sending to the UE information identifying the at least part of the configuration for the RCG that was determined by the RAN node. For example, the information sent to the UE can include one or more of the following:
- an identifier of the RC;
- respective identifiers of the one or more auxiliary cells;
- respective identifiers of the serving cells comprising the RCG; and
- an identifier of the RCG.

In some embodiments, these exemplary methods can also include selecting a new RC based on determining that the RC is invalid. The new RC is selected from a list of candidate serving cells based on one or more of the following criteria: randomly, candidate serving cell having the lowest or highest index, or RS transmission configuration of the candidate serving cells. In some of these embodiments, determining that the RC is invalid is based on one or more of the following:
- sending the UE a deactivation command for the RC;
- receiving from the UE an indication that the RC is deactivated; and
- RC remaining deactivated for at least a first duration.

In some of these embodiments, these exemplary methods can also include refraining from sending the UE a deactivation command for the RC when least one of the auxiliary cells of the RCG is activated.

In some embodiments, these exemplary methods can also include receiving, from the UE, a RA indicating that the UE determined that the RC is invalid or that the UE selected a new RC. In some variants, the RA can be received on one of the following: the RC, an auxiliary cell, or a serving cell not included in the RCG. In some variants, the RA can be received on resources reserved for indicating an invalid RC or for indicating an RC change.

Other embodiments include UEs (*e.g.,* wireless devices, IoT devices, etc. or component(s) thereof) and RAN nodes (*e.g.,* base stations, eNBs, gNBs, ng-eNBs, en-gNBs, *etc.,* or components thereof) configured to perform operations corresponding to any of the exemplary methods described herein. Other embodiments include non-transitory, computer-readable media storing program instructions that, when executed by processing circuitry, configure such UEs or RAN nodes to perform operations corresponding to any of the exemplary methods described herein.

These and other embodiments described herein can enable a UE to perform operations on multiple cells in a cell group even when a RS (e.g., SSB) is transmitted only on one cell in the group. In this manner, UEs can still operate correctly with reduced RS transmissions by a network, which reduces signaling overhead and interference due to RS transmissions. Reducing RS transmissions also increases network capacity available for transmission of data, while maintaining proper and/or correct operations of UEs.

These and other objects, features, and advantages of embodiments of the present disclosure will become apparent upon reading the following Detailed Description in view of the Drawings briefly described below.

### BRIEF DESCRIPTION OF THE DRAWINGS

Figure 1 is a high-level block diagram of an exemplary LTE network architecture.
Figure 2 is a block diagram of exemplary LTE CP and UP protocol layers.
Figure 3 shows a high-level view of an exemplary 5G/NR network architecture.
Figure 4 shows a high-level illustration of dual connectivity (DC) in combination with carrier aggregation (CA).
Figures 5-6 show high-level views of exemplary network architectures that support multi-RAT DC (MR-DC) using EPC and 5GC, respectively.
Figure 7 shows an exemplary state transition diagram for NR SCells.
Figure 8 is an exemplary SCG state transition diagram.
Figure 9 shows an arrangement in which a UE is configured with K cells (i.e., C1-CK) by a network, according to various embodiments of the present disclosure.
Figure 10 is a flow diagram of an exemplary method (e.g., procedure) for a UE, according to various embodiments of the present disclosure.
Figure 11 is a flow diagram of an exemplary method (e.g., procedure) for a RAN node, according to various embodiments of the present disclosure.
Figure 12 shows a communication system according to various embodiments of the present disclosure.
Figure 13 shows a UE according to various embodiments of the present disclosure.
Figure 14 shows a network node according to various embodiments of the present disclosure.
Figure 15 shows host computing system according to various embodiments of the present disclosure.
Figure 16 is a block diagram of a virtualization environment in which functions implemented by some embodiments of the present disclosure may be virtualized.
Figure 17 illustrates communication between a host computing system, a network node, and a UE via multiple connections, at least one of which is wireless, according to various embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.,* unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the disclosed embodiments will be apparent from the following description.

Furthermore, the following terms are used throughout the description given below:
- Radio Node: As used herein, a "radio node" can be either a "radio access node" or a "wireless device."
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e.g.,* a New Radio (NR) base station (gNB/en-gNB) in a 3GPP Fifth Generation (5G) NR network or an enhanced or evolved Node B (eNB/ng-eNB) in a 3GPP LTE network), base station distributed components (*e.g.,* CU and DU), base station control- and/or user-plane components (e.g., CU-CP, CU-UP), a high-power or macro base station, a low-power base station (*e.g.,* micro, pico, femto, or home base station, or the like), an integrated access backhaul (IAB) node, a transmission point, a remote radio unit (RRU or RRH), and a relay node.
- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that is capable, configured, arranged and/or operable to communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with the term "user equipment" (or "UE" for short), with both of these terms having a different meaning than the term "network node".
- Network Node: As used herein, a "network node" is any node that is either part of the radio access network (*e.g.,* a radio access node or equivalent name discussed above) or of the core network (*e.g.,* a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.,* administration) in the cellular communications network.
- Time resource: As used herein, a "time resource" can be any type of physical resource or radio resource that has (or covers) a duration of time. Examples of time resources include symbol, timeslot (or slot), sub-slot, mini-slot, subframe, radio frame, system frame number (SFN), hyper-SFN, transmission time interval (TTI), interleaving time, etc.
- Signal: As used herein, a "signal" (or "radio signal") can be any physical signal or physical channel. Examples of DL physical signals include PSS, SSS, CSI-RS, DMRS, signals in SSB, DRS, CRS, PRS etc. Examples of UL physical signals include SRS, DMRS, etc.
- Physical channel: As used herein a "physical channel" can be any channel carrying higher layer information such as data, control signaling, etc. Examples of physical channels include PBCH, PDCCH, PDSCH, PUSCH, PUCCH, and variants thereof.

Since the present disclosure relates to networks, devices, protocols, etc. specified in 3GPP standards, terminology from 3GPP standards (or similar terminology) is often used. However, the concepts disclosed herein are not limited to 3GPP-specified embodiments. Although the term "cell" is often used herein, it should be understood that (particularly in 5G/NR) since beams may be used instead of or in addition to cells, concepts disclosed herein apply to both cells and beams unless expressly stated otherwise or implied from the specific context of the disclosure.

Figure 2 illustrates a block diagram of an exemplary control plane (CP) protocol stack between a UE, an eNB, and an MME. The exemplary protocol stack includes Physical (PHY), Medium Access Control (MAC), Radio Link Control (RLC), Packet Data Convergence Protocol (PDCP), and Radio Resource Control (RRC) layers between the UE and eNB. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PDCP layer provides ciphering/deciphering and integrity protection for both CP and user plane (UP), as well as other UP functions such as header compression. The exemplary protocol stack also includes non-access stratum (NAS) signaling between the UE and the MME.

The RRC layer controls communications between a UE and an eNB at the radio interface, as well as the mobility of a UE between cells in the E-UTRAN. After a UE is powered ON it will be in the RRC_IDLE state until an RRC connection is established with the network, at which time the UE will transition to RRC_CONNECTED state (e.g., where data transfer can occur). The UE returns to RRC_IDLE after the connection with the network is released. In RRC_IDLE state, the UE does not belong to any cell, no RRC context has been established for the UE (*e.g.,* in E-UTRAN), and the UE is out of UL synchronization with the network. Even so, a UE in RRC_IDLE state is known in the EPC and has an assigned IP address.

Furthermore, in RRC_IDLE state, the UE's radio is active on a discontinuous reception (DRX) schedule configured by upper layers. During DRX active periods (also referred to as "DRX On durations"), an RRC _IDLE UE receives system information (SI) broadcast by a serving cell, performs measurements of neighbor cells to support cell reselection, and monitors a paging channel for pages from the EPC via an eNB serving the cell in which the UE is camping.

A UE must perform a random-access (RA) procedure to move from RRC_IDLE to RRC_CONNECTED state. In RRC_CONNECTED state, the cell serving the UE is known and an RRC context is established for the UE in the serving eNB, such that the UE and eNB can communicate. For example, a Cell Radio Network Temporary Identifier (C-RNTI) - a UE identity used for signaling between UE and network - is configured for a UE in RRC_CONNECTED state.

3GPP Rel-10 supports bandwidths larger than 20 MHz. One important Rel-10 requirement is backward compatibility with Rel-8. As such, a wideband LTE Rel-10 carrier (*e.g.,* >20 MHz) should appear as a plurality of carriers ("component carriers" or CCs) to a Rel-8 ("legacy") UE, which can be scheduled in all parts of the wideband Rel-10 carrier. This can be done by carrier aggregation (CA), whereby a Rel-10 terminal can receive multiple CCs, each preferably having the same structure as a Rel-8 carrier.

LTE dual connectivity (DC) was introduced in Rel-12. In DC operation, a UE in RRC_CONNECTED state consumes radio resources provided by at least two different network points connected to one another with a non-ideal backhaul. In LTE, these two network points may be referred to as a "Master eNB" (MeNB) and a "Secondary eNB" (SeNB). More generally, these network points can be referred to as master node (MN) and secondary node (SN), respectively. DC can be seen as a special case of CA in which the aggregated carriers (or cells) are provided by physically separated network nodes that are not connected via a robust, high-capacity connection.

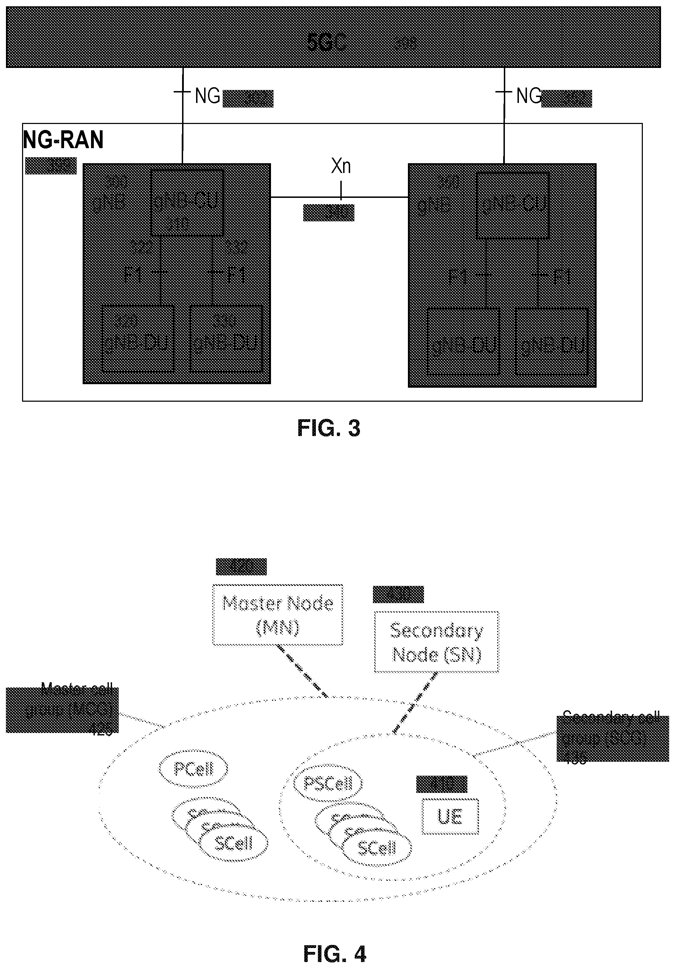

Figure 3 illustrates a high-level view of the 5G network architecture, consisting of a Next Generation RAN (NG-RAN) 399 and a 5G Core (5GC) 398. NG-RAN 399 can include a set of gNodeB's (gNBs) connected to the 3GC via one or more NG interfaces, such as gNBs 300, 350 connected via interfaces 302, 352, respectively. In addition, the gNBs can be connected to each other via one or more Xn interfaces, such as Xn interface 340 between gNBs 300 and 350. With respect the NR interface to UEs, each of the gNBs can support frequency division duplexing (FDD), time division duplexing (TDD), or a combination thereof.

NG-RAN 399 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport.

The NG RAN logical nodes shown in Figure 3 include a central (or centralized) unit (CU or gNB-CU) and one or more distributed (or decentralized) units (DU or gNB-DU). For example, gNB 300 includes gNB-CU 310 and gNB-DUs 320 and 330. CUs (*e.g.,* gNB-CU 310) are logical nodes that host higher-layer protocols and perform various gNB functions such controlling the operation of DUs. Each DU is a logical node that hosts lower-layer protocols and can include, depending on the functional split, various subsets of the gNB functions. As such, each of the CUs and DUs can include various circuitry needed to perform their respective functions, including processing circuitry, transceiver circuitry (*e.g.,* for communication), and power supply circuitry.

A gNB-CU connects to gNB-DUs over respective F1 logical interfaces, such as interfaces 322 and 332 shown in Figure 3. The gNB-CU and connected gNB-DUs are only visible to other gNBs and the 5GC as a gNB. In other words, the F1 interface is not visible beyond gNB-CU. In the gNB split CU-DU architecture illustrated by Figure 3, DC can be achieved by allowing a UE to connect to multiple DUs served by the same CU or by allowing a UE to connect to multiple DUs served by different CUs.

Several DC (or more generally, multi-connectivity) scenarios are specified for NR. These include NR-DC that is like LTE-DC discussed above, except that both the MN (or MgNB) and SN (or SgNB) employ the NR interface to communicate with the UE. In addition, various multi-RAT DC (MR-DC) scenarios are specified, whereby a UE can be configured to use resources provided by two different nodes, one providing E-UTRA/LTE access and the other one providing NR access. One node acts as MN providing a master cell group (MCG) and the other as SN providing a secondary cell group (SCG). The MN and SN are connected via a network interface and at least the MN is connected to a core network (e.g., EPC or 5GC).

Each of the CGs includes one MAC entity, a primary cell (PCell), and optionally one or more secondary cells (SCells). The term "Special Cell" (or "SpCell" for short) refers to the PCell of the MCG or the PSCell of the SCG depending on whether the UE's MAC entity is associated with the MCG or the SCG, respectively. In non-DC operation (*e.g.,* CA), SpCell refers to the PCell. An SpCell is always activated and supports physical UL control channel (PUCCH) transmission and contention-based random access by UEs.

3GPP TR 38.804 (v14.0.0) describes various exemplary DC scenarios or configurations in which the MN and SN can apply NR, LTE, or both. The following terminology is used to describe these exemplary DC scenarios or configurations:
- DC: LTE DC (*i.e.,* both MN and SN employ LTE, as discussed above);
- EN-DC: LTE-NR DC where MN (eNB) employs LTE and SN (gNB) employs NR, and both are connected to EPC.
- NGEN-DC: LTE-NR dual connectivity where a UE is connected to one ng-eNB that acts as a MN and one gNB that acts as a SN. The ng-eNB is connected to the 5GC and the gNB is connected to the ng-eNB via the Xn interface.
- NE-DC: LTE-NR dual connectivity where a UE is connected to one gNB that acts as a MN and one ng-eNB that acts as a SN. The gNB is connected to 5GC and the ng-eNB is connected to the gNB via the Xn interface.
- NR-DC (or NR-NR DC): both MN and SN employ NR.
- MR-DC (multi-RAT DC): a generalization of the Intra-E-UTRA Dual Connectivity (DC) described in 3GPP TS 36.300 (v16.3.0), where a multiple Rx/Tx UE may be configured to utilize resources provided by two different nodes connected via non-ideal backhaul, one providing E-UTRA access and the other one providing NR access. One node acts as the MN and the other as the SN. The MN and SN are connected via a network interface and at least the MN is connected to the core network. EN-DC, NE-DC, and NGEN-DC are different example cases of MR-DC.

Figure 4 shows a high-level illustration of DC combined with CA. In this illustration, each of the MN (420) and the SN (430) for the UE (410) can be an eNB or a gNB, in accordance with the various DC scenarios mentioned above. The MN provides the MCG (425) consisting of a PCell and three SCells arranged in CA, while the SN provides the SCG (435) consisting of a PSCell and three SCells arranged in CA.

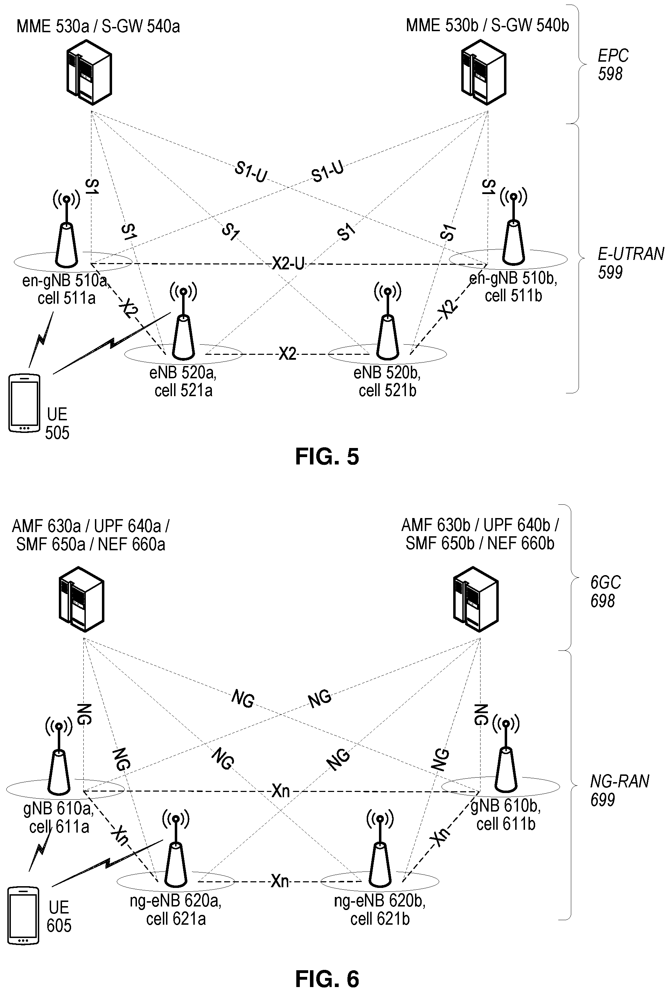

Figure 5 shows a high-level view of an exemplary network architecture that supports EN-DC, including an E-UTRAN 599 and an EPC 598. As shown in the figure, E-UTRAN 599 can include en-gNBs (*e.g.,* 510a,b) and eNBs (*e.g.,* 520a,b) that are interconnected with each other via respective X2 (or X2-U) interfaces. The eNBs can be similar to those shown in Figure 1, while the ng-eNBs can be similar to the gNBs shown in Figure 3 except that they connect to the EPC via an S1-U interface rather than to a 5GC via an X2 interface. The eNBs also connect to the EPC via an S1 interface, similar to the arrangement shown in Figure 1. More specifically, the en-gNBs and eNBs 520 connect to MMEs (*e.g.,* 530a,b) and S-GWs (e.g., 540a,b) in the EPC.

Each of the en-gNBs and eNBs can serve a geographic coverage area including one more cells, including cells 511a-b and 521a-b shown as exemplary in Figure 5. Depending on the cell in which it is located, a UE 505 can communicate with the en-gNB or eNB serving that cell via the NR or LTE radio interface, respectively. In addition, UE 505 can be in EN-DC connectivity with a first cell served by an eNB and a second cell served by an en-gNB, such as cells 520a and 510a shown in Figure 5.

Figure 6 shows a high-level view of an exemplary network architecture that supports MR-DC configurations based on 5GC. More specifically, Figure 6 shows an NG-RAN 699 and a 5GC 698. NG-RAN 699 can include gNBs (*e.g.,* 610a,b) and ng-eNBs (*e.g.,* 620a,b) that are interconnected with each other via respective Xn interfaces. The gNBs and ng-eNBs are also connected via the NG interfaces to the 5GC, more specifically to the Access and Mobility Management Function (AMF, *e.g.,* 630a,b) via respective NG-C interfaces and to the User Plane Function (UPF, *e.g.,* 640a,b) via respective NG-U interfaces. Moreover, the AMFs can communicate with one or more session management functions (SMFs, e.g., 650a,b) and network exposure functions (NEFs, e.g., 660a,b).

Each of the gNBs can be similar to those shown in Figure 5, while each of the ng-eNBs can be similar to the eNBs shown in Figure 1 except that they connect to the 5GC via an NG interface rather than to EPC via an S1 interface. Each of the gNBs and ng-eNBs can serve a geographic coverage area including one more cells, including cells 611a-b and 621a-b shown as exemplary in Figure 6. The gNBs and ng-eNBs can also use various directional beams to provide coverage in the respective cells. Depending on the cell in which it is located, a UE 605 can communicate with the gNB or ng-eNB serving that cell via the NR or LTE radio interface, respectively. In addition, the UE can be in MR-DC connectivity with a first cell served by an ng-eNB and a second cell served by a gNB, such as cells 620a and 610a shown in Figure 6.

In DC and CA, SCells can be configured (or de-configured) via RRC signaling, which is relatively slow. Configured SCells can be activated (or deactivated) via MAC control element (CE), which is relatively fast. Using MAC CEs in this manner, the network can quickly increase or decrease the number of activated SCells to match a UE's data rate requirements at any time.

3GPP previously specified dormancy of LTE SCells and dormancy-like behavior of NR SCells. When an LTE SCell is in dormant state, the UE does not need to monitor the corresponding physical DL control channel (PDCCH) or physical DL shared channel (PDSCH) and cannot transmit in the corresponding UL. This behavior is similar to deactivated state behavior, except that the UE is also required to perform and report CQI measurements. A PUCCH SCell (SCell configured with PUCCH) cannot be in dormant state.

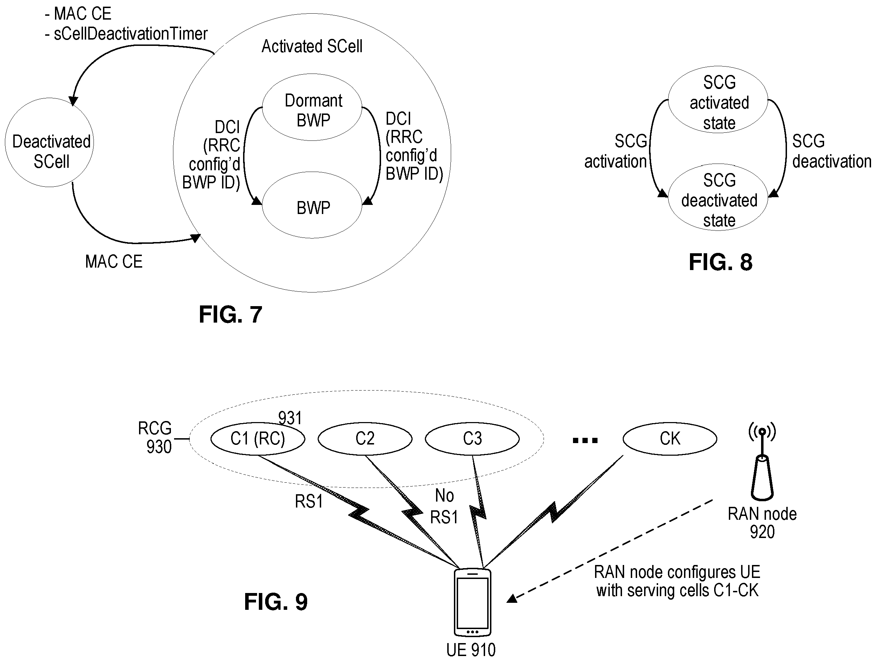

Figure 7 shows an exemplary state transition diagram for NR SCells. At a high level, a UE's SCell can transition between deactivated and activated states based on explicit commands from the network (e.g., MAC CEs) or expiration of a deactivation timer. There is one deactivation timer per SCell; the timer is started/restarted when the UE uses the SCell, such as when the UE is scheduled on the SCell via PDCCH.

Dormancy-like behavior for NR SCells is based on the concept of dormant bandwidth parts (BWP). One of the UE's dedicated BWPs configured via RRC signaling can be configured as dormant for an SCell. If the active BWP of the activated SCell is a dormant BWP, the UE stops monitoring PDCCH on the SCell but continues performing CSI measurements, automatic gain control (AGC), and beam management (if configured to do so).

Downlink control information (DCI) on PDCCH is used to control entering/leaving the dormant BWP for SCell(s) or SCG(s) and is sent to the SpCell of the cell group that includes the dormant SCell (i.e., to PCell if SCell belongs to MCG, to PSCell if SCell belongs to SCG). The SpCell (i.e., PCell or PSCell) and PUCCH SCell cannot be configured with a dormant BWP.

Discussions are ongoing in 3GPP about solutions for the Rel-17 MR-DC work item objective "Support efficient activation/de-activation mechanism for one SCG and SCells". One concept being discussed is a "deactivated SCG" with reduced energy consumption when traffic demands are dynamically reduced. This can be especially important for MR-DC configurations with NR SCG since, in some cases, NR UE energy consumption is much higher than in LTE.

Figure 8 is an exemplary state transition diagram illustrating two SCG states (sometimes referred to as "states for SCG activation") according to this concept. In Figure 8, these states are labelled "SCG deactivated state" and "SCG activated state" and are distinct from RRC states. Rather, these SCG states represent whether an SCG energy saving mode has been applied. 3GPP has agreed that SCG activation state can be configured via RRC. In addition, the following properties apply to a deactivated SCG:
- No PDCCH/PDSCH/PUSCH Tx/Rx on PSCell;
- All SCells are deactivated;
- SCG reconfiguration via MCG is supported;
- Radio resource management (RRM) and PSCell mobility is supported;
- Both RACH and RACH-less SCG activation is supported;
- UE keeps time alignment timer running;
- UE continues beam failure detection (BFD) and radio link monitoring (RLM), if configured; and
- SCG activation indication can indicate TCI state.

As briefly mentioned above, NR networks also provide coverage via "beams," which are coverage areas of network-transmitted reference signals (RS) that may be measured or monitored by a UE. More specifically, a UE performs measurements (e.g., for radio resource management, RRM) on one or more downlink (DL) RS of one or more cells in different RRC states. A measured cell may be on the same carrier frequency as the UE's serving cell (e.g., intra-frequency carrier) or it may be on a different carrier frequency (e.g., non-serving carrier frequency).

Synchronization signal/PBCH block (SSB) is one type of RS measured by UEs in NR cells. Each SSB carries a primary synchronization signal (NR-PSS), a secondary synchronization signal (NR-SSS), and a physical broadcast control channel (NR-PBCH) in four (4) successive symbols. Each SSB burst includes one or multiple SSBs, with the SSB burst being repeated periodically such as every 5, 10, 20, 40, 80, or 160 milliseconds (ms). A UE is configured with one or more SSB measurement timing configurations (SMTC), which provide information about SSB transmissions on cells of certain carrier frequency. SMTC includes parameters such as periodicity, duration of each repetition, time offset with respect to a reference time (e.g., serving cell's SFN), etc. Channel state information RS (CSI-RS) is another type of RS measured by UEs for RRM in NR cells.

The RAN may use UE-reported RRM measurements for various procedures such as mobility, positioning, self-organizing network (SON), minimization of drive testing (MDT), etc. Example RRM measurements include cell identification (e.g., cell detection, acquisition of physical cell identity (PCI)), RS received power (RSRP), RS received quality (RSRQ), signal to interference and noise ratio (SINR), acquisition of system information (SI) and/or cell global ID (CGI), RS Time Difference (RSTD), UE RX-TX time difference, radio link quality, out-of-sync detection, in-sync detection, etc.

As briefly mentioned above, it has been discussed within 3GPP to support SCells without SSBs (also referred to as "SSB-less cells" or "non-SSB cells"). For example, in inter-band CA, an SSB of a cell in one frequency band can be a source of timing/frequency synchronization ("RC") for an SSB-less SCell in another frequency band. 3GPP has proposed to identify for which bands this is feasible and the related UE requirements and then to introduce the related UE capability and signaling support.

However, there are various issues about SSB-less cells that remain unsolved. For example, it is unclear how UEs should use the RC SSBs for SSB-less cells. It is also unclear how the network knows and/or controls which cell(s) a UE can use as RC(s) and which SSB-less cells are linked to the RC(s). Furthermore, it is unclear how the network ensures that a UE always has a valid synchronization source for a cell used by the UE for communication, even if the cell is SSB-less.

Accordingly, embodiments of the present disclosure provide techniques whereby a UE is configured with at least one RS-less cell group (RCG) and uses the configured RCG for performing one or more operations. Embodiments include the following aspects and/or features that address problems, issues, and/or difficulties mentioned above:
- Rules and/or criteria for determining or creating an RCG comprising a RC (RC) and at least one auxiliary cell. Such rules and/or criteria may be pre-defined or configured by a network node.
- Rules and/or criteria for determining the RC within the RCG. Such rules and/or criteria may be pre-defined or configured by a network node.
- Procedures for enabling the UE to indicate capabilities, such as supported number of RCGs, size of each RCG (e.g., number of cells), etc., to the network node.
- Actions, procedures, and/or operations in the UE and the network node for when the UE is configured with at least one RCG, such as for when the RC changes, when the RC becomes invalid, when a cell in the RCG is deactivated, when the RC is deactivated, etc.

Embodiments provide various benefits and/or advantages. For example, embodiments enable a UE to perform operations on multiple cells in a cell group even when an RS (e.g., SSB) is transmitted only on one cell in the group. In this manner, UEs can still operate correctly with reduced RS transmissions by a network, which reduces signaling overhead and interference due to RS transmissions. Reducing RS transmissions also increases network capacity available for transmission of data, while maintaining proper and/or correct operations of UEs.

In the following description, an RCG includes a first cell (C1), a second cell (C2), and zero or more other cells. C1 transmits a first reference signal (RS1) that is not transmitted by C2, and a UE uses RS1 for synchronization with respect to both C1 and C2. As such, C1 is referred to as the RC (RC) but may also be called anchor cell, pilot cell, etc. Other cells in the RCG can be called auxiliary cells, dependent cells, etc.

Examples of RS1 include SSB, CSI-RS, PRS, DMRS, etc. In some cases, C2 may be configured to transmit to a second reference signal (RS2) that is different than RS1. For example, RS1 can be SSB and RS2 can be CSI-RS. The RCG may be called an SSB-less cell group when RS1 is SSB transmitted in the RC but not in any of the auxiliary cells of the RCG.

Figure 9 shows an example arrangement in which a UE (910) is configured with K cells (i.e., C1-CK) by a RAN node (920), according to various embodiments of the present disclosure. C1 is the RC (931) of the RCG (930), which also includes C2-C3. Other configured cells (e.g., C4-CK) do not belong to the RCG but in some cases may belong to another RCG configured for the UE (not shown). RC is configured to transmit RS1 (e.g., SSB) while C2-C3 do not transmit RS1. The UE uses RS1 received from RC for synchronization with C2-C3 in the RCG but not for synchronization with C4-CK that are not in the RCG. The arrangement shown in Figure 9 is referenced at different points in the following description, although reference numbers are omitted for sake of brevity.

Synchronization with a cell is based on the UE receiving a RS (e.g., RS1), processing the received RS, and adjusting one or more radio transceiver parameters (e.g., frequency, timing, automatic gain control (AGC), etc.) based on the received RS. After synchronization with the cell, the UE can transmit and/or receive signals in that cell. In some embodiments, the UE may use the synchronization information acquired from the RC based on RS1 for transmitting and/or receiving signals in one or more auxiliary cells in the RCG. This may be done, for example, when cells of the RCG are tightly time synchronized with each other.

In other embodiments, the UE may adapt, adjust, or transform the synchronization information acquired from the RC before transmitting and/or receiving signals in one or more auxiliary cells in the RCG. Such adjustments may include applying one or more offset values to the synchronization information, such as time offsets (δt), frequency offsets (δf), etc. The offset values may be the same or different for each of the auxiliary cells in the RCG. The UE may obtain the offset values for the respective auxiliary cells in the RCG based on one or more of the following: pre-configured information (e.g., based on 3GPP specifications), configuration by the network node (e.g., via RRC signaling), and historical data or statistics (e.g., past values used by the UE for the same RCG or another RCG with similar characteristics).

In various embodiments, a UE can obtain information about the RCG based on one or more of the following mechanisms:
- Pre-defined RCG. For example, RCG can be pre-defined in terms of multi-carrier (MC) band combination, e.g., CA combination, DC combination, etc.
- RCG configured by a network node, e.g., by the network that provides the UE's PCell. As an example, the RCG configured by the network can be part of a pre-defined set of cells. More specifically, if the pre-defined set includes C1-C3 on bands A-C respectively, the network configures the UE with an RCG including any two cells of the set in the corresponding bands.
- Configured RCG modified by the network and/or the UE based on one or more rules. For example, RC may be changed, one or more cells removed/de-configured, one or more cells added/configured, etc.

In various embodiments, various rules and/or criteria can be used to determine or create an RCG. Such rules and/or criteria may be pre-defined or configured by a network node. Some embodiments are described below based on illustrative examples.

In some embodiments, cells are associated with or belong to the same RCG based on frequency band. Some specific examples include:
- All cells in the RCG may belong to different frequency bands.
- All cells in the RCG may belong to frequency bands which are below certain frequency e.g., RCG comprising cells on bands below 1 GHz.
- All cells in the RCG may belong to frequency bands within a certain range of frequencies ΔF=Fmax-Fmin, e.g., within ΔF = 100 MHz, 200 MHz, 300 MHz, etc. For example, if ΔF = 200 MHz then RCG comprising C1, C2, and C3 belonging to 700, 800, and 900 MHz frequency bands is allowed.
- All cells in the RCG may belong to frequency bands below a certain frequency, e.g., frequency bands below 1 GHz.
- All cells in the RCG may belong to the same frequency band.
- Cells in the RCG may be in the same frequency band and/or in different frequency bands. For example, C1 and C3 may belong to the same frequency band (e.g., band A) while C2 may belong to another frequency band (e.g., band B).
- At least N11 cells belong to different frequency bands and not more than N12 cells belong to the same frequency band. N11 and N12 may depend on RCG and may be pre-defined or configured by the network.

In some embodiments, cells can belong to an RCG based on being in a frequency range (FR). Some specific examples include:
- All cells in the RCG may belong to the same FR, which can be lower or higher. Examples of lower and higher FRs are FR1 and FR2, respectively. Another example of a higher FR is FR3. For example, FR1 may be 410-7125 MHz, FR2 may be 24 GHz and above (e.g., 24-71 GHz), and FR3 may be higher than FR2.
- At least N21 cells belong to the same FR and not more than N22 cells belong to different FRs. N21 and N22 may depend on the RCG and may be pre-defined or configured by the network.

In some embodiments, cells are associated with or belong to the same RCG based on multi-carrier (MuC) operation or configuration. Examples of types of MuC include intra-band MuC (e.g., when serving cells operate in the same frequency band), inter-band MuC (e.g., when at least two serving cells operate in different frequency bands), intra-band contiguous MuC (e.g., when serving cells operate in adjacent carrier frequencies in the same frequency band), intra-band non-contiguous MuC (e.g., when at least two serving cells operate in non-adjacent carrier frequencies belonging to the same frequency band). One specific example is all cells in the RCG belong to inter-band CA. Another specific example is all cells in the RCG belong to intra-band non-contiguous CA.

In some embodiments, cells are associated with or belong to the same RCG based on type of deployment scenario or combination of two or more deployment scenarios. Examples of parameters related to or defining the deployment scenario include physical location of the cells (e.g., antennas), timings of the cells, size of the cells, quasi-co-location (QCL) parameters, etc. Some specific examples include:
- Cells that are co-located in the same physical location or site can belong to the same RCG, i.e., cells of the same RCG transmit signals from the same or co-located antennas. These are also called as co-located cells or co-located sites.
- Cells that are of the same or similar size (e.g., cell range or cell radius) can belong to the same RCG. In one specific example, two or more macro cells can belong to a first RCG, two or more smaller-size micro cells can belong to a second RCG, and two or more even smaller-size pico cells can belong to a third RCG.
- Cells indicated as quasi-co-located (QCL) by a parameter may belong to the same RCG.

In some embodiments, cells are associated with or belong to the same RCG based on the timing relation between cells. Timing relation between the cells can be related to the relation between the transmit timing of cells, relation between the receive timing of signals of cells at the UE, relation between the transmit timings of signals to the cells at the UE, timing advance group of cells etc. Some specific examples include:
- Cells can belong to the same RCG only when the magnitude of the difference between the network transmit timings of signals of the cells is less than a threshold (Hc). For example, the transmit timing difference of signals of the cells can be determined by comparing the transmit timing of their respective time resources. Examples of Hc include 3 µs, 5 µs, etc.
- Cells can belong to the same RCG only when the magnitude of the difference between the UE receive timing of signals of any pair of the cells at the UE is less than a threshold (Hr). Examples of Hr include 30.26 µs and 3 µs. Examples of UE measurements for determining the UE receive time difference between signal of the cells include RS time difference (RSTD), SFN and Frame Timing Difference (SFTD), etc. For example, the UE can be configured to measure RSTD and/or SFTD on one or more pairs of cells and to report the results to the network node, which in turn may use them for determining whether the cells belong to the same RCG or not. The UE may also use such measurements to determine whether the cells can belong to the same RCG, based on comparing the measurements with Hr. Hr may be pre-defined or configured by the network node.
- Cells can belong to the same RCG only when the magnitude of the difference between the UE transmit timing of signals transmitted to any pair of cells is less than a threshold (Ht). An example of a metric or parameter related to UE transmit timing difference is maximum transmission timing difference (MTTD). Examples of Ht include 32.47 µs, 2.47 µs, etc.
- Cells that use the same RC for timing can be configured in or belong to the same RCG. Examples of timing include timing advance command (TA), UE autonomous timing adjustment based on a DL RC, etc. In one example, cells in the same TA group (TAG) can be configured in or belong to the same RCG.

In some embodiments, cells can belong to the same RCG based on the beam management (BM) for directional beams that carry signals between the UE and the cells. Examples of BM include common beam management (CBM), independent beam management (IBM), etc. For signal reception based on CBM scheme, a UE can receive signals from the same Rx beam direction from all the cells involved in the CBM. For signal transmission based on CBM scheme, the UE can transmit signals in the same Tx beam direction in all the cells involved in the CBM. The UE supporting CBM typically has one common receiver for receiving beams from, and/or one common transmitter for transmitting beams to, cells involved in CBM. The UE can indicate its capability that it supports CBM for cells belonging to one or more bands. In some embodiments, cells for which the UE uses a CBM scheme can be configured in the same RCG.

In some embodiments, cells can belong to the same RCG based on numerology or related parameters used for signals in those cells. Examples of such parameters include subcarrier spacing (SCS), cyclic prefix (CP) length, slot duration, symbol duration etc. Examples of SCS include 15 kHz, 30 kHz, 60 kHz, 120 kHz, 240 kHz, etc. A cell may use a single numerology or multiple (mixed) numerologies for the various signals in the cell. Some specific examples include:
- Cells using the same numerology (i.e., for sub-carrier spacing, SCS) for operating their signals can be configured in the same RCG. For example, all cells using a numerology with SCS of 30 kHz can be configured in the same RCG.
- Cells that use multiple numerologies can be configured in the same RCG provided that the same numerologies are used in all the cells. For example, cells belonging to the same RCG can use 15 kHz and 30 kHz, respectively, for physical signals (e.g., CSI-RS) and physical channels (e.g., PDSCH).
- Cells using different numerologies can be configured in the same RCG provided that the difference between their numerologies is within a certain range, e.g., magnitude of the SCS difference is 30 kHz or less.

In some embodiments, cells can belong to the same RCG based on one or more bandwidth-related parameters. Examples of bandwidth-related parameters include transmission bandwidth, carrier bandwidth, bandwidth part (BWP), UE-specific bandwidth, etc. BWP and UE-specific bandwidth can be configured by the network node. Some specific examples include:
- Cells having the same bandwidth can be configured in the same RCG.
- Cells can belong to the same RCG only when a magnitude of a difference between cell bandwidths is within a certain range.
- Whether the cells can belong to the same RCG depends on the relation between the RC's BW (BWr) and the BWs of other cells. For example, cells can belong to the same RCG only when BWr is equal to or larger than the BWs of other cells.

In some embodiments, cells can belong to the same RCG based on a cell group (CG) configuration, e.g., for MCG and/or SCG. Some specific examples include:
- Only cells within the same CG can be configured in the same RCG.
- Cells in different CGs can be configured in the same RCG provided that one or more conditions are met. Conditions can be related to frequency difference, frequency bands, etc. In one example, when the difference in frequencies of the cells is within a range then the cells can be configured in the same RCG even if in different CGs.

In some embodiments, cells can belong to the same RCG based on duplex mode(s) used in the cells. Examples of duplex modes include FDD, TDD, HD-FDD, FD-FDD, etc. Duplex mode may be associated with frequency band. For example, cells using the same duplex mode (e.g., all cells in an FDD band) can be configured in the same RCG. As another example, cells using different duplex modes can be configured in the same RCG, e.g., some cells using FDD and some cells using TDD.

In some embodiments, cells can belong to the same RCG based on a relation between their transmission (Tx) power levels such base station minimum Tx power, maximum Tx power, average Tx power, difference between average and maximum Tx power, etc. For example, cells using same transmission power level for certain signals can belong to the same RCG.

In some embodiments, cells whose transmission power levels are different but related by some function can belong to the same RCG. Example functions include ratio, difference, max, min, ceiling, floor, average etc. For example, the function can be a difference less than a threshold (Hp, e.g., 6 dB). As such, a UE can adapt its receiver based on the function to receive signals from multiple cells in the same RCG even their power levels are different. The UE can obtain the function by pre-configuration (e.g., according to 3GPP specification), by receiving it from the network node, or a combination thereof.

In various embodiments, various rules and/or criteria can be used to determine a RC for an RCG. Such rules and/or criteria may be pre-defined or configured by a network node. Some embodiments are described below based on illustrative examples.

In some embodiments, the network indicates the RC to the UE. This may be indicated via RRC signaling, e.g., in a message used to add or modify SCells. This indication may be per serving cell, such that the network may indicate different RCs for a first serving cell and a second serving cell. These embodiments allow the network to select a suitable RC for a serving cell of a UE and to know which cell(s) are being used by the UE uses as RC(s).

In other embodiments, the UE can select the RC based on a rule. For example, the UE may consider a default cell as a RC unless and until otherwise indicated by the network. As another example, the UE considers only activated serving cells to be RC candidates. For example, if the UE has configured serving cells A-C but serving cell A is deactivated, the UE would only consider serving cells B-C as candidate serving cells. Other example rules to determine a default RC for a serving cell can include:
- PCell is the default cell.
- PSCell is the default cell.
- SCell with PUCCH is the default cell.
- Default cell is a cell close in frequency to the serving cell (e.g., difference < threshold).
- Default cell is a cell at certain frequency or in certain frequency band, e.g., a cell in the lowest frequency band among all the configured cells. For example, if configured C1 and C2 are in 700 MHz and 900 MHz bands, respectively, then C1 is the default cell.

In some embodiments, the UE determines RC based on received signal level (Sr) of the cell at the UE. In one example, any cell whose Sr is above certain threshold (Hs) can be configured as RC. In another example, a cell whose Sr is largest along all the configured cells in the RCG can be configured as the RC. In another example, a cell whose Sr is largest along all the configured cells in the RCG and also if Sr > Hr can be configured as the RC. Examples of Sr are measurements such as signal strength (SS), signal quality (SQ) etc. Examples of SS are path loss, RSRP, SS-RSRP etc. Examples of SQ are RSRQ, SS-RSRQ, SNR, SINR etc. Hr can be pre-defined or configured by the network node.

In some embodiments, the UE determines RC based on configuration of RS1, e.g., SMTC when RS1 is SSB. Examples of configuration parameters are RS1 duration, RS1 periodicity, RS1 time offset with respect to a reference time or reference time resource (e.g., SFN, subframe number etc.), etc. For example, if more than one cell transmits RS1 then the UE can select as RC the cell that transmits RS1 with shortest periodicity, the longest duration, and/or the most SSBs with the duration.

In some embodiments, the UE indicates to the network which cell(s) is(are) selected or used as RC(s). For example, the UE can provide an identifier (e.g., PCI) of the RC. In some variants, the UE can also indicate the auxiliary cells for which the RC(s) provide the reference, e.g., by including cell identifiers in the same manner as for the RC. The UE can indicate this information in an RRC message, a MAC CE, etc.

A cell acting as RC for auxiliary cells may also be a RC for itself, but in some variants the UE can omit an indication or identifier in this case. For example, if C1 is acting as RC for both C3 and itself, then the UE may omit the RC indication for C1. The network knows based on absence of a RC indication that C1 is a RC for itself. Serving cells with certain properties (e.g., PCell) may always be considered as RC for themselves. Accordingly, the UE may omit an indication of the RC for these serving cells, since the UE and network have a common implicit understanding of this information. This omission can reduce signaling overhead.

In some embodiments, the UE indicates for each cell a group identifier. This group identifier may be set to a first value for all cells in a first group of cells which share RC, and to a second value for all cells in a second group of cells which share RCs. For example, cells C1-C5 are configured for the UE, with C1-C5 being in a first RCG and C4-C5 being in a second RCG. The UE can send to the network a first group identifier value (e.g., "1") in association with each of C1-C3 and a second group identifier value (e.g., "2") in association with each of C4-C5. Based on receiving this information, the network knows that C1-C3 belong to the same group and have the same RC, and that C4-C5 belong to the same group and have the same RC. However, the group identifiers alone do not indicate the cells in the two RCGs that are acting as RCs.

In some embodiments, the UE can indicate to the network a maximum carrier frequency difference between a RC and any auxiliary cells in the RCG. In this manner, the UE can implicitly indicate some candidate RCs to the network. For example, a UE may intend to communicate on the RC and auxiliary cells using shared hardware (e.g., radio front end, PA, etc.), which can only be accomplished when the carrier frequencies of RC and the auxiliary cell(s) are different by less than the maximum carrier frequency difference.

In some embodiments, the UE may be capable of concurrent operation with a maximum number of RCGs (Nmax) during some time period, where concurrent can mean fully or partially overlapping. Nmax may depends on the UE's cell group, e.g., Nmax1 for RCGs configured in MCG, Nmax2 for RCGs configured in SCG. Furthermore, the UE may be capable of supporting a maximum number of cells (Smax) within each RCG and/or a total number of cells (Stot) across all RCGs. In some embodiments, the UE can report Nmax and either Smax (per cell group) or Stot to the network. In other embodiments, the UE may indicate that it can support more than Smax cells within one RCG provided that the UE is configured with a number of RCGs less than Nmax. The UE may report such capability information to the network via RRC or non-access stratum (NAS) signaling. Based on the received capability information, the network can determine how to configure cells within each RCG for the UE.

As discussed above, the network may activate and deactivate SCells for a UE based on several factors, such as amount of traffic generated by the UE, load on the SCells, etc. In some embodiments, the network refrains from deactivating an SCell when the UE is using it as RC for one or more auxiliary cells. This may be defined as a rule whereby the RC within the RCG cannot be deactivated.

The network may not be aware of which cell the UE uses as RC for other cells. In such case, the network can refrain from deactivating all SCells that are candidate RCs for the UE. The network may determine that the UE considers a cell to be a candidate RC based on UE capability signaling, e.g., maximum frequency separation, numerology, etc.

In other embodiments, the network can refrain from deactivating the RC unless one or more auxiliary cells in the RCG are also deactivated. For example, if C1 acts as a RC for an auxiliary cell C3, then the network may refrain from deactivating C1 when C3 is in an activated state for the UE. On the other hand, if C3 is in a deactivated state, then the network can also deactivate C1, so long as C1 is not a RC for another activated auxiliary cell.

In some embodiments, the UE can determine that a serving cell used as a RC is deactivated and in response selects another cell to be the RC. For example, the UE can select the new RC randomly from a list of candidate RCs. As another example, the UE can select the new RC from candidate RCs based on a rule applied to the candidate list, such as:
- Lowest or highest cell index in the list;
- Candidate cell whose received signal level is above a threshold and/or is largest among all candidate cells; and
- Cell RS configuration, e.g., type of RS transmitted (e.g., SSB), periodicity of transmitted RS, etc.

In some embodiments, the UE can refrain from changing the RC unless needed, e.g., upon RC deactivation. In other words, so long as the RC remains in activated state, the UE refrains from changing the RC for the RCG even if another candidate RC becomes better (based on some criteria) than the current RC. When the UE does change the RC, the UE can inform the network of the RC change and/or the identity of the newly selected RC.

As described above, the UE may deactivate SCells upon expiration of a timer maintained in the UE. In doing so, however, there is a risk that the UE has no RC for a serving cell. In some embodiments, the UE can refrain from deactivating the RC (e.g., upon expiration of the associated timer) when there are no other candidate RCs available. For example, assume that the UE is configured with C1 and C2 and either can be RC for a C3, but currently C1 is RC for C3. When the timer for C1 expires, the UE can deactivate C1 because C2 is also available to serve as RC for C3. However, if C1 remains deactivated and the timer for C2 expires, the UE would refrain from deactivating C2 because there are no other RC candidates available for C3.

In some embodiments, the UE can refrain from deactivating an SCell when there are other activated SCells that are using this SCell as RC. On the other hand, if the SCell is RC only for other deactivated SCells, then the UE may deactivate that RC in response to a deactivation event such as expiration of the associated timer.

In case the network needs to deactivate serving cells for a UE, the result may be that for a second serving cell in the RCG, there are no cells which can be used as RCs for the second serving cell. Note, this situation may also arise if serving cells are deactivated by some other procedure than network indicated serving cell deactivation. For example, in the NR and LTE specifications, there are procedures in the UE according to which the UE shall deactivate serving cells upon expiry of a timer maintained in the UE.

In some embodiments, when all available RC candidates for a serving cell in the RCG are deactivated, the UE can take one or more of the following actions for and/or towards the serving cell in the RCG:
- deactivate the serving cell;
- refrain from transmitting one or more signals to the serving cell;
- refrain from receiving one or more signals from the serving cell;
- send an indication to the network, e.g., that all available RC candidate are deactivated and/or that the serving cell has been deactivated; and
- turn of the UE transmitter towards the serving cell within a pre-defined duration (e.g., 10 ms).

In some embodiments, the UE can cease (e.g., temporarily) or pause communication with a cell whose RC has changed. For example, if C1 is RC for C3 but the UE needs to switch so that C2 is RC for C3, the UE may cease (e.g., temporarily) or pause communication with C3 upon making C2 the RC for C3. This may allow the UE to adjust its hardware configuration (e.g., tuning, AGC, re-synchronization, etc.) so that C2 can be used as RC for C3. As such, the duration over which the RC is changed may be considered an interruption period (Ti) during which the UE is not expected to transmit and/or receive signals in one or more auxiliary cells in the RCG (e.g., C3 in the above example). Ti may be expressed in terms of time resources, e.g., N1 subframes, N2 slots, N3 symbols, etc.

In some embodiments, the UE can perform a random access (RA) in response to changing the RC. In some variants, the UE can send a RA message (e.g., msg1, msg3, msgA) on resources designated, assigned, reserved, or configured for indicting a change in RC. For example, such resources may be a specific set of preambles, sequences, transmission occasions, frequency resources, etc. In various embodiments, the UE can perform RA on the RC or on another cell, which may be an auxiliary cell in the RCG or any other cell pre-configured and/or designated for that purpose.

In some scenarios, the current RC in the RCG may become invalid when one or more conditions occur, such that the UE can no longer use the RC's synchronization information for operating in auxiliary cells of the RCG. In such case, the RCG becomes invalid or de-configured. In another example, an existing RCG becomes invalid or de-configured when the UE does not determine (or is not configured by the network with) another RC for the RCG within a certain time period. Below are some examples of conditions under which the RC can become invalid:
- When the received signal level (Sr) of the RC at the UE falls below a threshold (G1).
- When Sr of the RC at the UE falls below a threshold (G2) for a time period (T11).
- When the RC remains deactivated for a time period (T12).
- When one or more radio link problems (RLP) occur or are detected on a RC. Examples of RLP include number of out-of-sync (OOS) detections exceeding a threshold (L1), radio link failure (RLF), triggering or starting of a RLF timer, expiry of a RLF timer, beam failure detection (BFD), etc. OOS and RLF are part of radio link monitoring (RLM) procedures performed by the UE a serving cell. Beam failure occurs or is detected when radio link quality on RS configured for BFD becomes worse than a threshold.
- When the magnitude of the difference between UE receive timing of signals from a RC and from at least one auxiliary cell exceeds a threshold (G3), which can be pre-defined or configured by the network node.
- When the magnitude of the difference between UE transmit timing of signals to a RC and to at least one auxiliary cell exceeds a threshold (G4), which can be pre-defined or configured by the network node.
- When a number (L2) of DL clear channel assessment (CCA) failures by the UE for a RC exceeds a threshold (G5) over a period of time (T21). The UE may determine DL CCA autonomously (e.g., by detecting absence of expected signals such as SSB) or by receiving a message from the network node (e.g., bitmap indicating failed or successful DL CCA in the last time period). G5 can be pre-defined or configured by the network node. Before transmission of signals on a carrier subject to CCA, the UE performs an evaluation to determine whether the channel is free and can transmit if the channel is determined to be free. If evaluation results in CCA failure, then the UE cannot transmit or receive in the evaluated radio resource during some timer period. CCA is also referred to as channel assessment (CSMA), listen-before-talk (LBT), contention-based access, contention-based transmission, etc.
- When a number (L3) of UL CCA failures by the UE for a RC exceeds a threshold (G6) over a period of time (T22). G6 can be pre-defined or configured by the network node. The UE may determine UL CCA failures autonomously (e.g., by detecting it is unable to transmit in UL) or by receiving a message from the network node (e.g., bitmap indicating failed or successful UL CCA in the last time period).

In some embodiments, when the RC becomes invalid the UE can transmit an indication to the network node that the RC is invalid. For example, the UE may transmit this indication by performing a RA on the RC, on an auxiliary cell in the RCG, or some other designated cell. The UE may also use the same principles for sending the RA for invalid RC as used when the RC has changed, such as described above.

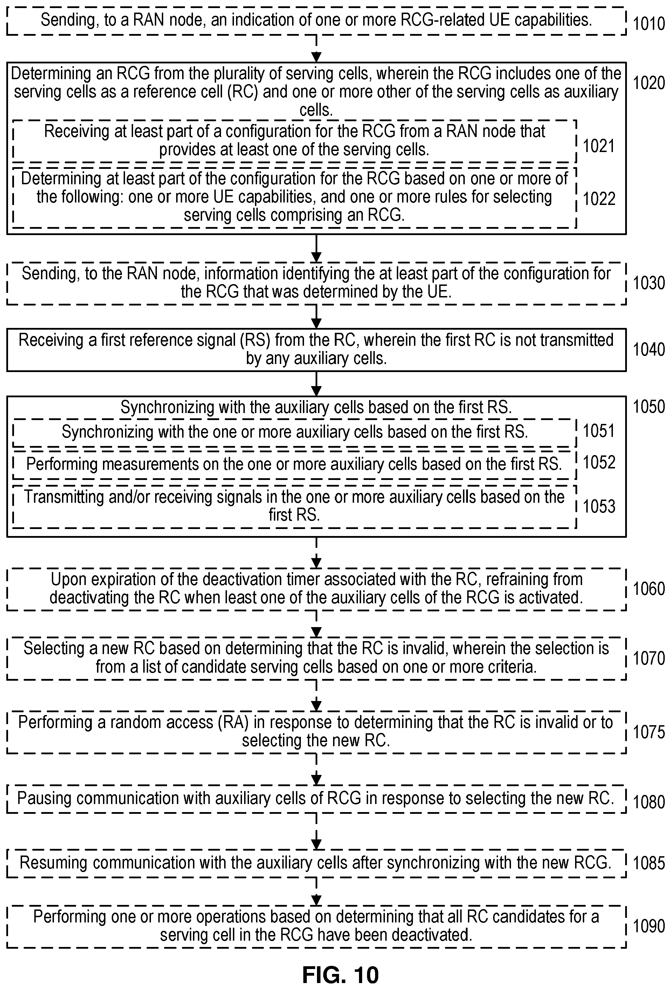

The embodiments described above can be further illustrated with reference to Figures 10-11, which show exemplary methods (e.g., procedures) performed by a UE and a RAN node, respectively. In other words, various features of operations described below correspond to various embodiments described above. These exemplary methods can be used cooperatively to provide various exemplary benefits and/or advantages described herein. Although Figures 10-11 show specific blocks in particular orders, the operations of the respective methods can be performed in different orders than shown and can be combined and/or divided into blocks having different functionality than shown. Optional blocks or operations are indicated by dashed lines.

In particular, Figure 10 shows a flow diagram of an exemplary method (e.g., procedure) for a UE configured to communicate with a RAN via a plurality of serving cells, according to various embodiments of the present disclosure. The exemplary method can be performed by a UE (*e.g.,* wireless device, IoT device, modem, etc. or component thereof) such as described elsewhere herein.

The exemplary method can include operations of block 1020, where the UE can determine a reference cell group (RCG) from the plurality of serving cells. The RCG comprises one of the serving cells as a reference cell (RC) and one or more other of the serving cells as auxiliary cells. The exemplary method can also include operations of block 1040, where the UE can receive a first RS from the RC, wherein the first RS is not received by the UE from the one or more auxiliary cells. For example, the first RS may not be transmitted by the one or more auxiliary cells, or may be transmitted by the one or more but not received by the UE. The exemplary method can also include operations of block 1050, where the UE can perform one or more operations in the one or more auxiliary cells based on the first RS received from the RC.

In some embodiments, performing the one or more operations in block 1050 can include one or more of the following operations, labelled with corresponding sub-block numbers:
- (1051) synchronizing with the one or more auxiliary cells based on the first RS;
- (1052) performing measurements on the one or more auxiliary cells based on the first RS; and
- (1053) transmitting and/or receiving signals in the one or more auxiliary cells based on the first RS.

In some embodiments, determining the RCG in block 1020 includes one or more of the following, labelled with corresponding sub-block numbers:
- (1021) receiving at least part of a configuration for the RCG from a RAN node that provides at least one of the serving cells; and
- (1022) determining at least part of the configuration for the RCG based on one or more of the following: one or more UE capabilities, and one or more rules for selecting serving cells comprising an RCG.

In some of these embodiments, the received at least part of the configuration includes one or more of the following:
- an identifier of the RC;
- respective identifiers of the one or more auxiliary cells;
- respective identifiers of the serving cells comprising the RCG; and
- an identifier of the RCG.

In some of these embodiments, the exemplary method can also include the operations of block 1010, where the UE can send to the RAN node an indication of one or more of the following UE capabilities:
- maximum difference between a carrier frequency of a RC and respective carrier frequencies of auxiliary cells of an RCG;
- maximum number of concurrently configured RCGs (Nmax);
- maximum number of serving cells per configured RCG (Smax);
- maximum number of serving cells in all configured RCGs (Stot); and
- a relation between Nmax and Smax.

The received at least a part of the configuration (e.g., in sub-block 1021) is based on the indicated UE capabilities.

In some of these embodiments, the rules include one or more of the following criteria for selecting the serving cells comprising the RCG (e.g., in sub-block 1022):
- on adjacent carrier frequencies;
- on non-adjacent carrier frequencies;
- having the same bandwidth;
- having different bandwidths that meet one or more bandwidth criteria;
- using the same numerology or sub-carrier spacing (SCS);
- using different numerologies or SCS that meet one or more numerology or SCS criteria;
- in the same frequency band;
- in different frequency bands that meet one or more band criteria;
- in the same frequency range (FR);
- in different FRs that meet one or more range criteria;
- provided from the same physical location or being quasi-co-located (QCL);
- having the same or similar sizes;
- one or more serving cell timing relationships;
- one or more relationships between serving cell transmission power;
- support for common beam management;
- being part of the same multi-connectivity cell group; and
- using the same or different duplexing modes.

In some of these embodiments, the rules include one or more of the following criteria for selecting the RC for the RCG (e.g., in sub-block 1022):
- a default serving cell;
- a serving cell having a maximum UE received signal strength or quality;
- a serving cell having a UE received signal strength or quality above a threshold;
- a relationship among carrier frequencies or frequency bands of the serving cells; and
- RS transmission configuration of the serving cells.
In some variants, the default serving cell is one of the following: a PCell, a PSCell, or an SpCell with capability to receive PUCCH.

In some of these embodiments, the exemplary method can also include the operations of block 1030, where the UE can send to the RAN node information identifying the at least part of the configuration for the RCG that was determined by the UE (e.g., in sub-block 1022). For example, the information sent to the RAN node can include one or more of the following:
- an identifier of the RC;
- respective identifiers of the one or more auxiliary cells;
- respective identifiers of the serving cells comprising the RCG; and
- an identifier of the RCG.

In some embodiments, the exemplary method can also include the operations of block 1070, where the UE can select a new RC based on determining that the RC is invalid. The new RC is selected from a list of candidate serving cells based on one or more of the following criteria: randomly, candidate serving cell having the lowest or highest index, or RS transmission configuration of the candidate serving cells (e.g., SMTC). In some of these embodiments, determining that the RC is invalid in block 1070 is based on one or more of the following:
- receiving a deactivation command for the RC (e.g., from the RAN node);
- expiration of a deactivation timer associated with the RC;
- RC remaining deactivated for at least a first duration;
- UE received signal strength or quality for the RC less than a threshold for at least a second duration;
- one or more UE radio link problems on the RC;
- difference between UE receive timing of signals from the RC and from at least one auxiliary cell exceeds a threshold;
- difference between UE transmit timing of signals to the RC and to at least one auxiliary cell exceeds a threshold; and
- when a number of DL or UL clear channel assessment (CCA) failures by the UE in the RC exceeds a threshold during a third duration.

In some of these embodiments, the exemplary method can also include the operations of block 1060, where upon expiration of the deactivation timer associated with the RC, the UE can refrain from deactivating the RC when least one of the auxiliary cells of the RCG is activated.

In some of these embodiments, the exemplary method can also include the operations of blocks 1080-1085, where the UE can pause communication with the auxiliary cells of the RCG in response to selecting the new RC and resume communication with the auxiliary cells after synchronizing with the new RCG.

In some of these embodiments, the exemplary method can also include the operations of block 1075, where the UE can perform a random access (RA) in response to determining that the RC is invalid or to selecting the new RC. In some variants, the RA can be performed on one of the following: the RC, an auxiliary cell, or a serving cell not included in the RCG. In some variants, the RA can be performed using resources reserved for indicating an invalid RC or for indicating an RC change.

In some embodiments, the exemplary method can also include the operations of block 1090, where the UE can perform one or more of the following operations based on determining that all RC candidates for a first serving cell in the RCG have been deactivated:
- deactivating the first serving cell;
- refraining from transmitting one or more signals to the first serving cell;
- refraining from receiving one or more signals from the first serving cell;
- sending, to the RAN node, an indication that all RC candidates for the first serving cell in the RCG have been deactivated; and
- turning off the UE transmitter towards the first serving cell within a pre-defined duration.

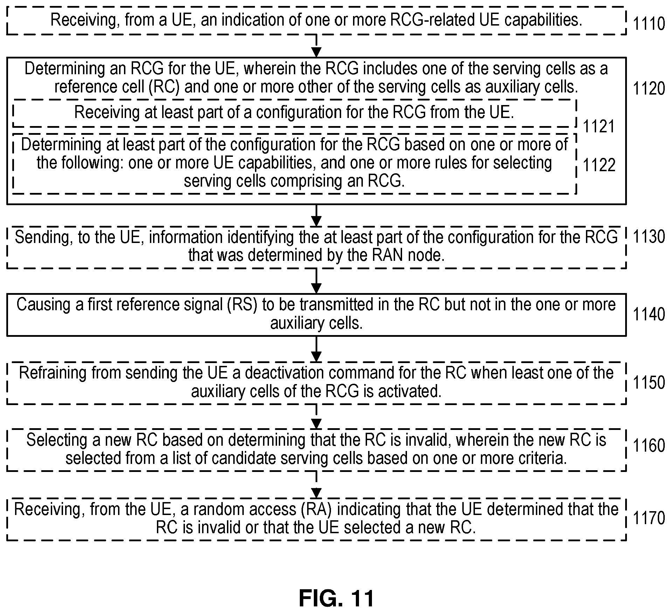

In addition, Figure 11 shows a flow diagram of an exemplary method (e.g., procedure) for a RAN node configured to communicate with a UE via a plurality of serving cells, according to various embodiments of the present disclosure. The exemplary method can be performed by a RAN node (*e.g.,* base station, eNB, gNB, ng-eNB, en-gNB, *etc.,* or components thereof) such as described elsewhere herein.

The exemplary method can include operations of block 1120, where the RAN node can determine an RCG for the UE. The RCG includes one of the serving cells as a reference cell (RC) and one or more other of the serving cells as auxiliary cells. The exemplary method can also include operations of block 1140, where the RAN node can cause a first RS to be transmitted in the RC but not in any of the auxiliary cells. However, this does not restrict the RAN node's activities toward serving cells other than the RC and the one or more auxiliary cells.

In some embodiments, determining the RCG in block 1120 includes one or more of the following, labelled with corresponding sub-block numbers:
- (1121) receiving at least part of a configuration for the RCG from the UE; and
- (1122) determining at least part of the configuration for the RCG based on one or more of the following: one or more UE capabilities, and one or more rules for selecting serving cells comprising an RCG.

In some of these embodiments, the received at least part of the configuration includes one or more of the following:
- an identifier of the RC;
- respective identifiers of the one or more auxiliary cells;
- respective identifiers of the serving cells comprising the RCG; and
- an identifier of the RCG.

In some of these embodiments, the exemplary method can also include the operations of block 1110, where the RAN node can receive from the UE an indication of one or more of the following UE capabilities:
- maximum difference between a carrier frequency of a RC and respective carrier frequencies of auxiliary cells of an RCG;
- maximum number of concurrently configured RCGs (Nmax);
- maximum number of serving cells per configured RCG (Smax);
- maximum number of serving cells in all configured RCGs (Stot); and
- a relation between Nmax and Smax,
The determined at least a part of the configuration (e.g., in sub-block 1121) is based on the indicated UE capabilities.

In various embodiments, the rules used in sub-block 1122 can include any of those discussed above for UE selection of the RC and other serving cells for the RCG (e.g., in sub-block 1022).

The exemplary method can also include operations of block 1130, where the RAN node can send to the UE information identifying the at least part of the configuration for the RCG that was determined by the RAN node. For example, the information sent to the UE can include one or more of the following:
- an identifier of the RC;
- respective identifiers of the one or more auxiliary cells;
- respective identifiers of the serving cells comprising the RCG; and
- an identifier of the RCG.

In some embodiments, the exemplary method can also include the operations of block 1160, where the RAN node can select a new RC based on determining that the RC is invalid. The selection is from a list of candidate serving cells based on one or more of the following criteria: randomly, candidate serving cell having the lowest or highest index, or RS transmission configuration of the candidate serving cells (e.g., SMTC). In some of these embodiments, determining that the RC is invalid is based on one or more of the following:
- sending the UE a deactivation command for the RC;
- receiving from the UE an indication that the RC is deactivated; and
- RC remaining deactivated for at least a first duration.

In some of these embodiments, the exemplary method can also include the operations of block 1150, where the RAN node can refrain from sending the UE a deactivation command for the RC when least one of the auxiliary cells of the RCG is activated.

In some embodiments, the exemplary method can also include the operations of block 1170, where the RAN node can receive, from the UE, a RA indicating that the UE determined that the RC is invalid or that the UE selected a new RC. In some variants, the RA can be received on one of the following: the RC, an auxiliary cell, or a serving cell not included in the RCG. In some variants, the RA can be received on resources reserved for indicating an invalid RC or for indicating an RC change.

Although various embodiments are described herein above in terms of methods, apparatus, devices, computer-readable medium and receivers, the person of ordinary skill will readily comprehend that such methods can be embodied by various combinations of hardware and software in various systems, communication devices, computing devices, control devices, apparatuses, non-transitory computer-readable media, *etc.*

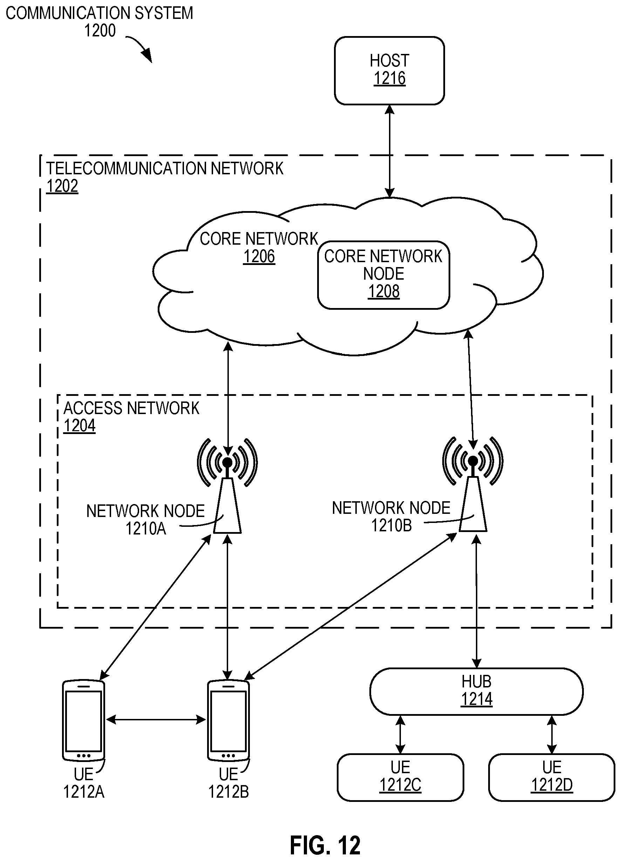

Figure 12 shows an example of a communication system 1200 in accordance with some embodiments. In this example, the communication system 1200 includes a telecommunication network 1202 that includes an access network 1204, such as a radio access network (RAN), and a core network 1206, which includes one or more core network nodes 1208. The access network 1204 includes one or more access network nodes, such as network nodes 1210a and 1210b (one or more of which may be generally referred to as network nodes 1210), or any other similar 3GPP access node or non-3GPP access point. The network nodes 1210 facilitate direct or indirect connection of UEs, such as by connecting UEs 1212a, 1212b, 1212c, and 1212d (one or more of which may be generally referred to as UEs 1212) to the core network 1206 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1200 may include any number of wired or wireless networks, network nodes, UEs, and/or any other components or systems that may facilitate or participate in the communication of data and/or signals whether via wired or wireless connections. The communication system 1200 may include and/or interface with any type of communication, telecommunication, data, cellular, radio network, and/or other similar type of system.

The UEs 1212 may be any of a wide variety of communication devices, including wireless devices arranged, configured, and/or operable to communicate wirelessly with the network nodes 1210 and other communication devices. Similarly, the network nodes 1210 are arranged, capable, configured, and/or operable to communicate directly or indirectly with the UEs 1212 and/or with other network nodes or equipment in the telecommunication network 1202 to enable and/or provide network access, such as wireless network access, and/or to perform other functions, such as administration in the telecommunication network 1202.

In the depicted example, the core network 1206 connects the network nodes 1210 to one or more hosts, such as host 1216. These connections may be direct or indirect via one or more intermediary networks or devices. In other examples, network nodes may be directly coupled to hosts. The core network 1206 includes one more core network nodes (e.g., core network node 1208) that are structured with hardware and software components. Features of these components may be substantially similar to those described with respect to the UEs, network nodes, and/or hosts, such that the descriptions thereof are generally applicable to the corresponding components of the core network node 1208. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 1216 may be under the ownership or control of a service provider other than an operator or provider of the access network 1204 and/or the telecommunication network 1202, and may be operated by the service provider or on behalf of the service provider. The host 1216 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, communication system 1200 of Figure 12 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); LTE, and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, telecommunication network 1202 is a cellular network that implements 3GPP standardized features. Accordingly, telecommunications network 1202 may support network slicing to provide different logical networks to different devices that are connected to the telecommunication network 1202. For example, telecommunications network 1202 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, UEs 1212 are configured to transmit and/or receive information without direct human interaction. For instance, a UE may be designed to transmit information to the access network 1204 on a predetermined schedule, when triggered by an internal or external event, or in response to requests from the access network 1204. Additionally, a UE may be configured for operating in single- or multi-RAT or multi-standard mode. For example, a UE may operate with any one or combination of Wi-Fi, NR, and LTE, such as being configured for multi-radio dual connectivity (MR-DC) to an NR gNB and to an LTE eNB.

In the example, hub 1214 communicates with the access network 1204 to facilitate indirect communication between one or more UEs (e.g., UE 1212c and/or 1212d) and network nodes (e.g., network node 1210b). In some examples, the hub 1214 may be a controller, router, content source and analytics, or any of the other communication devices described herein regarding UEs. For example, the hub 1214 may be a broadband router enabling access to the core network 1206 for the UEs. As another example, the hub 1214 may be a controller that sends commands or instructions to one or more actuators in the UEs. Commands or instructions may be received from the UEs, network nodes 1210, or by executable code, script, process, or other instructions in the hub 1214. As another example, the hub 1214 may be a data collector that acts as temporary storage for UE data and, in some embodiments, may perform analysis or other processing of the data. As another example, the hub 1214 may be a content source. For example, for a UE that is a VR headset, display, loudspeaker or other media delivery device, the hub 1214 may retrieve VR assets, video, audio, or other media or data related to sensory information via a network node, which the hub 1214 then provides to the UE either directly, after performing local processing, and/or after adding additional local content. In still another example, the hub 1214 acts as a proxy server or orchestrator for the UEs, such as if one or more of the UEs are low energy IoT devices.

The hub 1214 may have a constant/persistent or intermittent connection to the network node 1210b. The hub 1214 may also allow for a different communication scheme and/or schedule between the hub 1214 and UEs (e.g., UE 1212c and/or 1212d), and between the hub 1214 and the core network 1206. In other examples, the hub 1214 is connected to the core network 1206 and/or one or more UEs via a wired connection. Moreover, the hub 1214 may be configured to connect to an M2M service provider over the access network 1204 and/or to another UE over a direct connection. In some scenarios, UEs may establish a wireless connection with the network nodes 1210 while still connected via the hub 1214 via a wired or wireless connection. In some embodiments, the hub 1214 may be a dedicated hub - that is, a hub whose primary function is to route communications to/from the UEs from/to the network node 1210b. In other embodiments, the hub 1214 may be a non-dedicated hub that can route communications between the UEs and network node 1210b, but can also operate as a communication start and/or end point for certain data channels.

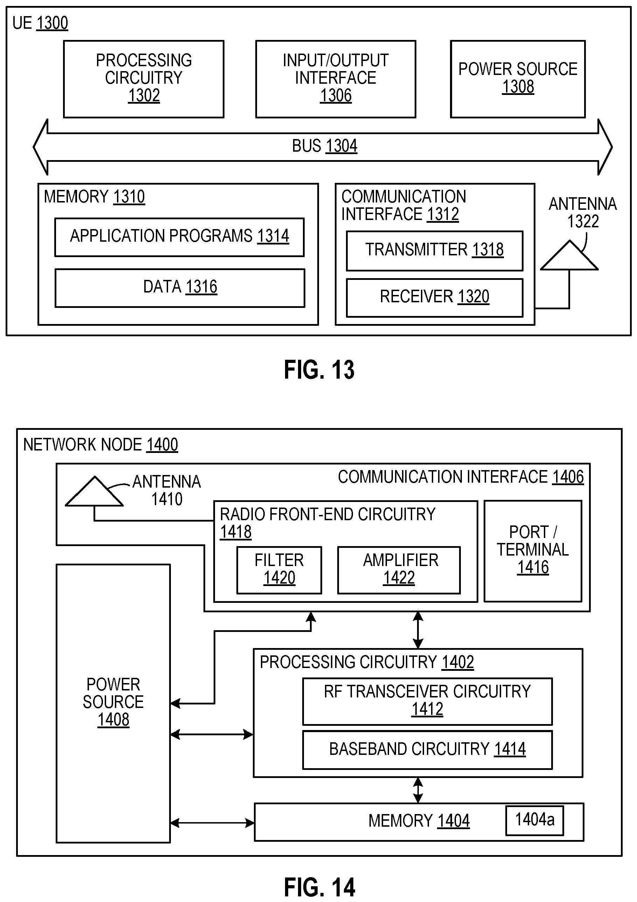

Figure 13 shows a UE 1300 in accordance with some embodiments. Examples of UE 1300 include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by 3GPP, including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

UE 1300 includes processing circuitry 1302 that is operatively coupled via a bus 1304 to an input/output interface 1306, a power source 1308, a memory 1310, a communication interface 1312, and/or any other component, or any combination thereof. Certain UEs may utilize all or a subset of the components shown in Figure 13. The level of integration between the components may vary from one UE to another UE. Further, certain UEs may contain multiple instances of a component, such as multiple processors, memories, transceivers, transmitters, receivers, etc.

Processing circuitry 1302 is configured to process instructions and data and may be configured to implement any sequential state machine operative to execute instructions stored as machine-readable computer programs in the memory 1310. The processing circuitry 1302 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1302 may include multiple central processing units (CPUs).

In the example, the input/output interface 1306 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1300. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1308 is structured as a battery or battery pack. Other types of power sources, such as an external power source (e.g., an electricity outlet), photovoltaic device, or power cell, may be used. The power source 1308 may further include power circuitry for delivering power from the power source 1308 itself, and/or an external power source, to the various parts of the UE 1300 via input circuitry or an interface such as an electrical power cable. Delivering power may be, for example, for charging of the power source 1308. Power circuitry may perform any formatting, converting, or other modification to the power from the power source 1308 to make the power suitable for the respective components of the UE 1300 to which power is supplied.

The memory 1310 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1310 includes one or more application programs 1314, such as an operating system, web browser application, a widget, gadget engine, or other application, and corresponding data 1316. The memory 1310 may store, for use by the UE 1300, any of a variety of various operating systems or combinations of operating systems.

The memory 1310 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1310 may allow the UE 1300 to access instructions, application programs and the like, stored on transitory or non-transitory memory media, to off-load data, or to upload data. An article of manufacture, such as one utilizing a communication system may be tangibly embodied as or in the memory 1310, which may be or comprise a device-readable storage medium.

The processing circuitry 1302 may be configured to communicate with an access network or other network using the communication interface 1312. The communication interface 1312 may comprise one or more communication subsystems and may include or be communicatively coupled to an antenna 1322. The communication interface 1312 may include one or more transceivers used to communicate, such as by communicating with one or more remote transceivers of another device capable of wireless communication (e.g., another UE or a network node in an access network). Each transceiver may include a transmitter 1318 and/or a receiver 1320 appropriate to provide network communications (e.g., optical, electrical, frequency allocations, and so forth). Moreover, the transmitter 1318 and receiver 1320 may be coupled to one or more antennas (e.g., antenna 1322) and may share circuit components, software or firmware, or alternatively be implemented separately.

In the illustrated embodiment, communication functions of the communication interface 1312 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1312, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., an alert is sent when moisture is detected), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 1300 shown in Figure 13.

As yet another specific example, in an IoT scenario, a UE may represent a machine or other device that performs monitoring and/or measurements and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 14 shows a network node 1400 in accordance with some embodiments. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1400 includes a processing circuitry 1402, a memory 1404, a communication interface 1406, and a power source 1408. The network node 1400 may be composed of multiple physically separate components (e.g., a NodeB component and a RNC component, or a BTS component and a BSC component, etc.), which may each have their own respective components. In certain scenarios in which the network node 1400 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1400 may be configured to support multiple radio access technologies (RATs). In such embodiments, some components may be duplicated (e.g., separate memory 1404 for different RATs) and some components may be reused (e.g., a same antenna 1410 may be shared by different RATs). The network node 1400 may also include multiple sets of the various illustrated components for different wireless technologies integrated into network node 1400, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1400.

The processing circuitry 1402 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1400 components, such as the memory 1404, to provide network node 1400 functionality.

In some embodiments, the processing circuitry 1402 includes a system on a chip (SOC). In some embodiments, the processing circuitry 1402 includes one or more of radio frequency (RF) transceiver circuitry 1412 and baseband processing circuitry 1414. In some embodiments, the radio frequency (RF) transceiver circuitry 1412 and the baseband processing circuitry 1414 may be on separate chips (or sets of chips), boards, or units, such as radio units and digital units. In alternative embodiments, some or all of RF transceiver circuitry 1412 and baseband processing circuitry 1414 may be on the same chip or set of chips, boards, or units.

The memory 1404 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1402. The memory 1404 may store any suitable instructions, data, or information, including a computer program, software, an application including one or more of logic, rules, code, tables, and/or other instructions (collective denoted computer program product 1404a) capable of being executed by the processing circuitry 1402 and utilized by the network node 1400. The memory 1404 may be used to store any calculations made by the processing circuitry 1402 and/or any data received via the communication interface 1406. In some embodiments, the processing circuitry 1402 and memory 1404 is integrated.

The communication interface 1406 is used in wired or wireless communication of signaling and/or data between a network node, access network, and/or UE. As illustrated, the communication interface 1406 comprises port(s)/terminal(s) 1416 to send and receive data, for example to and from a network over a wired connection. The communication interface 1406 also includes radio front-end circuitry 1418 that may be coupled to, or in certain embodiments a part of, the antenna 1410. Radio front-end circuitry 1418 comprises filters 1420 and amplifiers 1422. The radio front-end circuitry 1418 may be connected to an antenna 1410 and processing circuitry 1402. The radio front-end circuitry may be configured to condition signals communicated between antenna 1410 and processing circuitry 1402. The radio front-end circuitry 1418 may receive digital data that is to be sent out to other network nodes or UEs via a wireless connection. The radio front-end circuitry 1418 may convert the digital data into a radio signal having the appropriate channel and bandwidth parameters using a combination of filters 1420 and/or amplifiers 1422. The radio signal may then be transmitted via the antenna 1410. Similarly, when receiving data, the antenna 1410 may collect radio signals which are then converted into digital data by the radio front-end circuitry 1418. The digital data may be passed to the processing circuitry 1402. In other embodiments, the communication interface may comprise different components and/or different combinations of components.

In certain alternative embodiments, the network node 1400 does not include separate radio front-end circuitry 1418, instead, the processing circuitry 1402 includes radio front-end circuitry and is connected to the antenna 1410. Similarly, in some embodiments, all or some of the RF transceiver circuitry 1412 is part of the communication interface 1406. In still other embodiments, the communication interface 1406 includes one or more ports or terminals 1416, the radio front-end circuitry 1418, and the RF transceiver circuitry 1412, as part of a radio unit (not shown), and the communication interface 1406 communicates with the baseband processing circuitry 1414, which is part of a digital unit (not shown).

The antenna 1410 may include one or more antennas, or antenna arrays, configured to send and/or receive wireless signals. The antenna 1410 may be coupled to the radio front-end circuitry 1418 and may be any type of antenna capable of transmitting and receiving data and/or signals wirelessly. In certain embodiments, the antenna 1410 is separate from the network node 1400 and connectable to the network node 1400 through an interface or port.

The antenna 1410, communication interface 1406, and/or the processing circuitry 1402 may be configured to perform any receiving operations and/or certain obtaining operations described herein as being performed by the network node. Any information, data and/or signals may be received from a UE, another network node and/or any other network equipment. Similarly, the antenna 1410, the communication interface 1406, and/or the processing circuitry 1402 may be configured to perform any transmitting operations described herein as being performed by the network node. Any information, data and/or signals may be transmitted to a UE, another network node and/or any other network equipment.

The power source 1408 provides power to the various components of network node 1400 in a form suitable for the respective components (e.g., at a voltage and current level needed for each respective component). The power source 1408 may further comprise, or be coupled to, power management circuitry to supply the components of the network node 1400 with power for performing the functionality described herein. For example, the network node 1400 may be connectable to an external power source (e.g., the power grid, an electricity outlet) via an input circuitry or interface such as an electrical cable, whereby the external power source supplies power to power circuitry of the power source 1408. As a further example, the power source 1408 may comprise a source of power in the form of a battery or battery pack which is connected to, or integrated in, power circuitry. The battery may provide backup power should the external power source fail.

Embodiments of the network node 1400 may include additional components beyond those shown in Figure 14 for providing certain aspects of the network node's functionality, including any of the functionality described herein and/or any functionality necessary to support the subject matter described herein. For example, the network node 1400 may include user interface equipment to allow input of information into the network node 1400 and to allow output of information from the network node 1400. This may allow a user to perform diagnostic, maintenance, repair, and other administrative functions for the network node 1400.

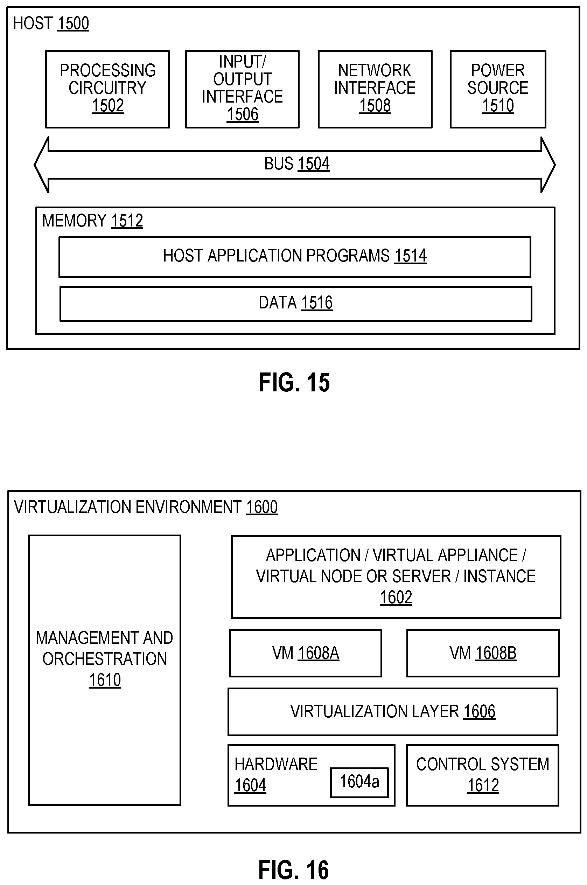

Figure 15 is a block diagram of a host 1500, which may be an embodiment of the host 1216 of Figure 12, in accordance with various aspects described herein. As used herein, the host 1500 may be or comprise various combinations hardware and/or software, including a standalone server, a blade server, a cloud-implemented server, a distributed server, a virtual machine, container, or processing resources in a server farm. The host 1500 may provide one or more services to one or more UEs.

The host 1500 includes processing circuitry 1502 that is operatively coupled via a bus 1504 to an input/output interface 1506, a network interface 1508, a power source 1510, and a memory 1512. Other components may be included in other embodiments. Features of these components may be substantially similar to those described with respect to the devices of previous figures, such as Figures 13 and 14, such that the descriptions thereof are generally applicable to the corresponding components of host 1500.

The memory 1512 may include one or more computer programs including one or more host application programs 1514 and data 1516, which may include user data, e.g., data generated by a UE for the host 1500 or data generated by the host 1500 for a UE. Embodiments of the host 1500 may utilize only a subset or all of the components shown. The host application programs 1514 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1514 may also provide for user authentication and licensing checks and may periodically report health, routes, and content availability to a central node, such as a device in or on the edge of a core network. Accordingly, the host 1500 may select and/or indicate a different host for over-the-top services for a UE. The host application programs 1514 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 16 is a block diagram illustrating a virtualization environment 1600 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1600 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1602 (which may alternatively be called software instances, virtual appliances, network functions, virtual nodes, virtual network functions, etc.) are run in the virtualization environment 1600 to implement some of the features, functions, and/or benefits of some of the embodiments disclosed herein.

Hardware 1604 includes processing circuitry, memory that stores software and/or instructions (collective denoted computer program product 1604a) executable by hardware processing circuitry, and/or other hardware devices as described herein, such as a network interface, input/output interface, and so forth. Software may be executed by the processing circuitry to instantiate one or more virtualization layers 1606 (also referred to as hypervisors or virtual machine monitors (VMMs)), provide VMs 1608a and 1608b (one or more of which may be generally referred to as VMs 1608), and/or perform any of the functions, features and/or benefits described in relation with some embodiments described herein. The virtualization layer 1606 may present a virtual operating platform that appears like networking hardware to the VMs 1608.

The VMs 1608 comprise virtual processing, virtual memory, virtual networking or interface and virtual storage, and may be run by a corresponding virtualization layer 1606. Different embodiments of the instance of a virtual appliance 1602 may be implemented on one or more of VMs 1608, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1608 may be a software implementation of a physical machine that runs programs as if they were executing on a physical, non-virtualized machine. Each of the VMs 1608, and that part of hardware 1604 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1608 on top of the hardware 1604 and corresponds to the application 1602.

Hardware 1604 may be implemented in a standalone network node with generic or specific components. Hardware 1604 may implement some functions via virtualization. Alternatively, hardware 1604 may be part of a larger cluster of hardware (e.g., such as in a data center or CPE) where many hardware nodes work together and are managed via management and orchestration 1610, which, among others, oversees lifecycle management of applications 1602. In some embodiments, hardware 1604 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1612 which may alternatively be used for communication between hardware nodes and radio units.

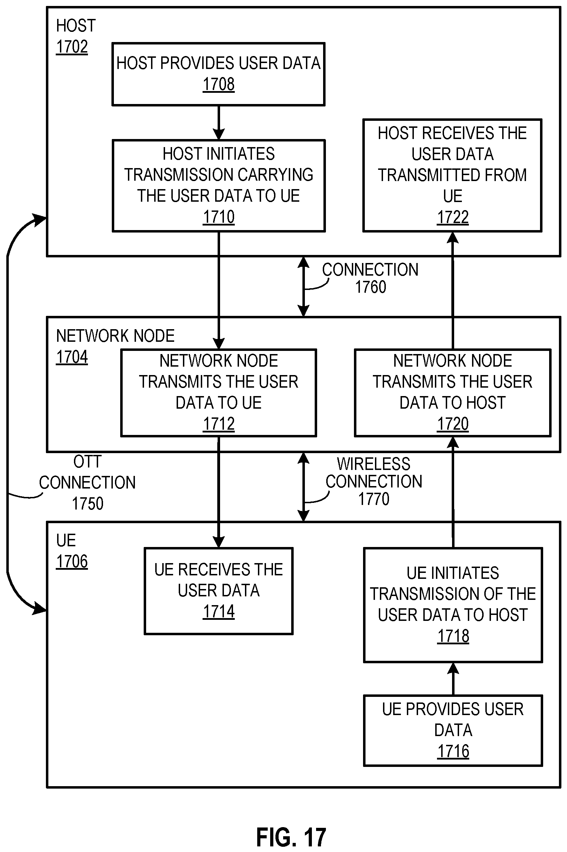

Figure 17 shows a communication diagram of a host 1702 communicating via a network node 1704 with a UE 1706 over a partially wireless connection in accordance with some embodiments. Example implementations, in accordance with various embodiments, of the UE (such as a UE 1212a of Figure 12 and/or UE 1300 of Figure 13), network node (such as network node 1210a of Figure 12 and/or network node 1400 of Figure 14), and host (such as host 1216 of Figure 12 and/or host 1500 of Figure 15) discussed in the preceding paragraphs will now be described with reference to Figure 17.

Like host 1500, embodiments of host 1702 include hardware, such as a communication interface, processing circuitry, and memory. The host 1702 also includes software, which is stored in or accessible by the host 1702 and executable by the processing circuitry. The software includes a host application that may be operable to provide a service to a remote user, such as the UE 1706 connecting via an over-the-top (OTT) connection 1750 extending between the UE 1706 and host 1702. In providing the service to the remote user, a host application may provide user data which is transmitted using the OTT connection 1750.

The network node 1704 includes hardware enabling it to communicate with the host 1702 and UE 1706. The connection 1760 may be direct or pass through a core network (like core network 1206 of Figure 12) and/or one or more other intermediate networks, such as one or more public, private, or hosted networks. For example, an intermediate network may be a backbone network or the Internet.

The UE 1706 includes hardware and software, which is stored in or accessible by UE 1706 and executable by the UE's processing circuitry. The software includes a client application, such as a web browser or operator-specific "app" that may be operable to provide a service to a human or non-human user via UE 1706 with the support of the host 1702. In the host 1702, an executing host application may communicate with the executing client application via the OTT connection 1750 terminating at the UE 1706 and host 1702. In providing the service to the user, the UE's client application may receive request data from the host's host application and provide user data in response to the request data. The OTT connection 1750 may transfer both the request data and the user data. The UE's client application may interact with the user to generate the user data that it provides to the host application through the OTT connection 1750.

The OTT connection 1750 may extend via a connection 1760 between the host 1702 and the network node 1704 and via a wireless connection 1770 between the network node 1704 and the UE 1706 to provide the connection between the host 1702 and the UE 1706. The connection 1760 and wireless connection 1770, over which the OTT connection 1750 may be provided, have been drawn abstractly to illustrate the communication between the host 1702 and the UE 1706 via the network node 1704, without explicit reference to any intermediary devices and the precise routing of messages via these devices.

As an example of transmitting data via the OTT connection 1750, in step 1708, the host 1702 provides user data, which may be performed by executing a host application. In some embodiments, the user data is associated with a particular human user interacting with the UE 1706. In other embodiments, the user data is associated with a UE 1706 that shares data with the host 1702 without explicit human interaction. In step 1710, the host 1702 initiates a transmission carrying the user data towards the UE 1706. The host 1702 may initiate the transmission responsive to a request transmitted by the UE 1706. The request may be caused by human interaction with the UE 1706 or by operation of the client application executing on the UE 1706. The transmission may pass via the network node 1704, in accordance with the teachings of the embodiments described throughout this disclosure. Accordingly, in step 1712, the network node 1704 transmits to the UE 1706 the user data that was carried in the transmission that the host 1702 initiated, in accordance with the teachings of the embodiments described throughout this disclosure. In step 1714, the UE 1706 receives the user data carried in the transmission, which may be performed by a client application executed on the UE 1706 associated with the host application executed by the host 1702.

In some examples, the UE 1706 executes a client application which provides user data to the host 1702. The user data may be provided in reaction or response to the data received from the host 1702. Accordingly, in step 1716, the UE 1706 may provide user data, which may be performed by executing the client application. In providing the user data, the client application may further consider user input received from the user via an input/output interface of the UE 1706. Regardless of the specific manner in which the user data was provided, the UE 1706 initiates, in step 1718, transmission of the user data towards the host 1702 via the network node 1704. In step 1720, in accordance with the teachings of the embodiments described throughout this disclosure, the network node 1704 receives user data from the UE 1706 and initiates transmission of the received user data towards the host 1702. In step 1722, the host 1702 receives the user data carried in the transmission initiated by the UE 1706.

One or more of the various embodiments improve the performance of OTT services provided to the UE 1706 using the OTT connection 1750, in which the wireless connection 1770 forms the last segment. For example, embodiments described herein can enable a UE to perform operations on multiple cells in a cell group even when a reference signal (e.g., SSB) is transmitted only on one cell in the group. In this manner, UEs can still operate correctly with reduced RS transmissions by a network, which reduces signaling overhead and interference due to RS transmissions. Reducing RS transmissions also increases network capacity available for transmission of data, while maintaining proper and/or correct operations of UEs. By improving the performance of UEs and/or networks in this manner, embodiments can increase the value of OTT services provided via such UEs and/or networks to both end users and service providers.

In an example scenario, factory status information may be collected and analyzed by the host 1702. As another example, the host 1702 may process audio and video data which may have been retrieved from a UE for use in creating maps. As another example, the host 1702 may collect and analyze real-time data to assist in controlling vehicle congestion (e.g., controlling traffic lights). As another example, the host 1702 may store surveillance video uploaded by a UE. As another example, the host 1702 may store or control access to media content such as video, audio, VR or AR which it can broadcast, multicast or unicast to UEs. As other examples, the host 1702 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 1750 between the host 1702 and UE 1706, in response to variations in the measurement results. The measurement procedure and/or the network functionality for reconfiguring the OTT connection may be implemented in software and hardware of the host 1702 and/or UE 1706. In some embodiments, sensors (not shown) may be deployed in or in association with other devices through which the OTT connection 1750 passes; the sensors may participate in the measurement procedure by supplying values of the monitored quantities exemplified above, or supplying values of other physical quantities from which software may compute or estimate the monitored quantities. The reconfiguring of the OTT connection 1750 may include message format, retransmission settings, preferred routing etc.; the reconfiguring need not directly alter the operation of the network node 1704. Such procedures and functionalities may be known and practiced in the art. In certain embodiments, measurements may involve proprietary UE signaling that facilitates measurements of throughput, propagation times, latency and the like, by the host 1702. The measurements may be implemented in that software causes messages to be transmitted, in particular empty or 'dummy' messages, using the OTT connection 1750 while monitoring propagation times, errors, etc.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the spirit and scope of the disclosure. Various embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (e.g., "data" and "information"). It should be understood, that although these terms (and/or other terms that can be synonymous to one another) can be used synonymously herein, there can be instances when such words can be intended to not be used synonymously.

## Claims

1. A method for a user equipment, UE, configured to communicate with a radio access network, RAN, via a plurality of serving cells, the method comprising:
determining (1020) a reference cell group, RCG, from the plurality of serving cells, wherein the RCG includes one of the serving cells as a reference cell, RC, and one or more other of the serving cells as auxiliary cells;
receiving (1040) a first reference signal, RS, from the RC, wherein the first RS is not received by the UE from the one or more auxiliary cells; and
performing (1050) one or more operations in the one or more auxiliary cells based on the first RS received from the RC.

2. The method of claim 1, wherein performing (1050) the one or more operations comprises one or more of the following:
synchronizing (1051) with the one or more auxiliary cells based on the first RS;
performing (1052) measurements on the one or more auxiliary cells based on the first RS; and
transmitting and/or receiving (1053) signals in the one or more auxiliary cells based on the first RS.

3. The method of any of claims 1-2, wherein determining (1020) the RCG comprises one or more of the following:
receiving (1021) at least part of a configuration for the RCG from a RAN node that provides at least one of the serving cells; and
determining (1022) at least part of the configuration for the RCG based on one or more of the following: one or more UE capabilities, and one or more rules for selecting serving cells comprising an RCG.

4. The method of claim 3, wherein the received at least part of the configuration includes one or more of the following:
an identifier of the RC;
respective identifiers of the one or more auxiliary cells;
respective identifiers of the serving cells comprising the RCG; and
an identifier of the RCG.

5. The method of any of claims 3-4, further comprising sending (1010), to the RAN node, an indication of one or more of the following UE capabilities:
maximum difference between a carrier frequency of a RC and respective carrier frequencies of auxiliary cells of an RCG;
maximum number of concurrently configured RCGs, Nmax;
maximum number of serving cells per configured RCG, Smax;
maximum number of serving cells in all configured RCGs, Stot; and
a relation between Nmax and Smax,
wherein the received at least a part of the configuration is based on the indicated UE capabilities.

6. The method of any of claims 3-5, wherein the rules include one or more of the following criteria for selecting the serving cells comprising the RCG:
on adjacent carrier frequencies;
on non-adjacent carrier frequencies;
having the same bandwidth;
having different bandwidths that meet one or more bandwidth criteria;
using the same numerology or sub-carrier spacing, SCS;
using different numerologies or SCS that meet one or more numerology or SCS criteria;
in the same frequency band;
in different frequency bands that meet one or more band criteria;
in the same frequency range, FR;
in different FRs that meet one or more range criteria;
provided from the same physical location or being quasi-co-located, QCL;
having the same or similar sizes;
one or more serving cell timing relationships;
one or more relationships between serving cell transmission power;
support for common beam management;
being part of the same multi-connectivity cell group; and
using the same or different duplexing modes.

7. The method of claim 3-6, wherein the rules include one or more of the following criteria for selecting the RC for the RCG:
a default serving cell;
a serving cell having a maximum UE received signal strength or quality;
a serving cell having a UE received signal strength or quality above a threshold;
a relationship among carrier frequencies or frequency bands of the serving cells; and
RS transmission configuration of the serving cells.

8. The method of claim 7, wherein the default serving cell is one of the following: a primary cell, PCell; a primary secondary cell group cell, PSCell; or a special cell, SpCell, with capability to receive a physical uplink control channel, PUCCH.

9. The method of any of claims 3-8, further comprising sending (1030), to the RAN node, information identifying the at least part of the configuration for the RCG that was determined by the UE.

10. The method of claim 9, wherein the information sent to the RAN node includes one or more of the following:
an identifier of the RC;
respective identifiers of the one or more auxiliary cells;
respective identifiers of the serving cells comprising the RCG; and
an identifier of the RCG.

11. The method of any of claims 1-10, further comprising selecting (1070) a new RC based on determining that the RC is invalid, wherein the new RC is selected from a list of candidate serving cells based on one or more of the following criteria:
randomly;
candidate serving cell having the lowest or highest index; and
RS transmission configuration of the candidate serving cells.

12. The method of claim 11, wherein determining that the RC is invalid is based on one or more of the following:
receiving a deactivation command for the RC;
expiration of a deactivation timer associated with the RC;
RC remaining deactivated for at least a first duration;
UE received signal strength or quality for the RC less than a threshold for at least a second duration;
one or more UE radio link problems on the RC;
difference between UE receive timing of signals from the RC and from at least one auxiliary cell exceeds a threshold;
difference between UE transmit timing of signals to the RC and to at least one auxiliary cell exceeds a threshold; and
when a number of downlink, DL, or uplink, UL, clear channel assessment, CCA, failures by the UE in the RC exceeds a threshold during a third duration.

13. The method of claim 12, further comprising, upon expiration of the deactivation timer associated with the RC, refraining from deactivating (1060) the RC when least one of the auxiliary cells of the RCG is activated.

14. A method for a radio access network, RAN, node configured to communicate with a user equipment, UE, via a plurality of serving cells, the method comprising:
determining (1120) a reference cell group, RCG, for the UE, wherein the RCG comprises one of the serving cells as a reference cell, RC, and one or more other of the serving cells as auxiliary cells; and
causing (1140) a first reference signal, RS, to be transmitted in the RC but not in any of the auxiliary cells.

15. A user equipment, UE (120, 410, 505, 605, 910, 1212, 1300, 1706) configured to communicate with a radio access network, RAN (100, 399, 599, 699, 1204) via a plurality of serving cells, the UE being further configured to perform a method according any one of the claims 1-13.

16. A radio access network, RAN, node (105, 110, 115, 300, 350, 420, 430, 510, 520, 610, 620, 920, 1210, 1400, 1602, 1704) configured to communicate with a user equipment, UE (120, 410, 505, 605, 910, 1212, 1300, 1706) via a plurality of serving cells, the RAN node being further configured to perform a method according to claim 14.

## Patentansprüche

1. Verfahren für eine Benutzereinrichtung, UE, die zum Kommunizieren mit einem Funkzugangsnetzwerk, RAN, über eine Mehrzahl von bedienenden Zellen konfiguriert ist, wobei das Verfahren Folgendes umfasst:
Bestimmen (1020) einer Referenzzellengruppe, RCG, aus der Mehrzahl von bedienenden Zellen, wobei die RCG eine der bedienenden Zellen als eine Referenzzelle, RC, und eine oder mehrere andere der bedienenden Zellen als Hilfszellen umfasst;
Empfangen (1040) eines ersten Referenzsignals, RS, von der RC, wobei das erste RS durch die UE nicht von der einen oder den mehreren Hilfszellen empfangen wird; und
Durchführen (1050) einer oder mehrerer Operationen in der einen oder den mehreren Hilfszellen basierend auf dem ersten RS, das von der RC empfangen wird.

2. Verfahren nach Anspruch 1, wobei das Durchführen (1050) der einen oder der mehreren Operationen eines oder mehreres von Folgendem umfasst:
Synchronisieren (1051) mit der einen oder den mehreren Hilfszellen basierend auf dem ersten RS;
Durchführen (1052) von Messungen an der einen oder den mehreren Hilfszellen basierend auf dem ersten RS; und
Senden und/oder Empfangen (1053) von Signalen in der einen oder den mehreren Hilfszellen basierend auf dem ersten RS.

3. Verfahren nach einem der Ansprüche 1-2, wobei das Bestimmen (1020) der RCG eines oder mehreres von Folgendem umfasst:
Empfangen (1021) mindestens eines Teils einer Konfiguration für die RCG von einem RAN-Knoten, der mindestens eine der bedienenden Zellen versorgt; und
Bestimmen (1022) mindestens eines Teils der Konfiguration für die RCG basierend auf einem oder mehreren von Folgenden: einer oder mehreren UE-Fähigkeiten und einer oder mehreren Regeln zum Auswählen bedienender Zellen, die eine RCG umfassen.

4. Verfahren nach Anspruch 3, wobei der mindestens eine empfangene Teil der Konfiguration eines oder mehrere von Folgenden umfasst:
eine Kennung der RC;
jeweilige Kennungen der einen oder der mehreren Hilfszellen;
jeweilige Kennungen der bedienenden Zellen, die die RCG umfassen; und
eine Kennung der RCG.

5. Verfahren nach einem der Ansprüche 3-4, ferner umfassend Senden (1010) einer Angabe einer oder mehrerer der folgenden UE-Fähigkeiten an den RAN-Knoten:
eine maximale Differenz zwischen einer Trägerfrequenz einer RC und jeweiligen Trägerfrequenzen von Hilfszellen einer RCG;
eine maximale Anzahl von gleichzeitig konfigurierten RCGs, Nmax;
eine maximale Anzahl von bedienenden Zellen pro konfigurierter RCG, Smax;
eine maximale Anzahl von bedienenden Zellen in allen konfigurierten RCGs, Stot; und
eine Beziehung zwischen Nmax und Smax,
wobei der mindestens eine empfangene Teil der Konfiguration auf den angegebenen UE-Fähigkeiten basiert.

6. Verfahren nach einem der Ansprüche 3-5, wobei die Regeln eines oder mehrere der folgenden Kriterien zum Auswählen der bedienenden Zellen umfassen, die die RCG umfassen:
auf benachbarten Trägerfrequenzen;
auf nicht benachbarten Trägerfrequenzen;
mit derselben Bandbreite;
mit verschiedenen Bandbreiten, die ein oder mehrere Bandbreitenkriterien erfüllen;
dieselbe Numerologie oder denselben Unterträgerabstand, SCS, verwendend;
verschiedene Numerologien oder SCS verwendend, die ein oder mehrere Numerologie- oder SCS-Kriterien erfüllen;
in demselben Frequenzband;
in verschiedenen Frequenzbändern, die ein oder mehrere Bandkriterien erfüllen;
in demselben Frequenzbereich, FR;
in verschiedenen FRs, die ein oder mehrere Bereichskriterien erfüllen;
bereitgestellt von demselben physischen Standort oder quasi ortsgleich angeordnet, QCL;
mit denselben oder ähnlichen Größen;
eine oder mehrere Taktbeziehungen der bedienenden Zelle;
eine oder mehrere Beziehungen zwischen der Sendeleistung der bedienenden Zelle;
Unterstützung für gemeinsame Strahlverwaltung;
zu derselben Zellengruppe mit Mehrfachkonnektivität gehörig; und
dieselben oder unterschiedliche Duplexmodi verwendend.

7. Verfahren nach einem der Ansprüche 3-6, wobei die Regeln eines oder mehrere der folgenden Kriterien zum Auswählen der RC für die RCG umfassen:
eine standardmäßige bedienende Zelle;
eine bedienende Zelle mit einer maximalen UE-Empfangssignalstärke oder -qualität;
eine bedienende Zelle mit einer UE-Empfangssignalstärke oder -qualität über einem Schwellenwert;
eine Beziehung zwischen Trägerfrequenzen oder Frequenzbändern der bedienenden Zellen; und
RS-Übertragungskonfiguration der bedienenden Zellen.

8. Verfahren nach Anspruch 7, wobei die standardmäßige bedienende Zelle eine von folgenden ist: eine Primärzelle, PCell; eine primäre Sekundärzellen-Gruppenzelle, PSCell; oder eine Spezialzelle, SpCell, die einen physikalischen Uplink-Steuerkanal, PUCCH, empfangen kann.

9. Verfahren nach einem der Ansprüche 3-8, ferner umfassend Senden (1030) von Informationen an den RAN-Knoten, die den mindestens einen Teil der Konfiguration für die RCG identifizieren, die von der UE bestimmt wurde.

10. Verfahren nach Anspruch 9, wobei die an den RAN-Knoten gesendeten Informationen eines oder mehrere von Folgenden umfassen:
eine Kennung der RC;
jeweilige Kennungen der einen oder der mehreren Hilfszellen;
jeweilige Kennungen der bedienenden Zellen, die die RCG umfassen; und
eine Kennung der RCG.

11. Verfahren nach einem der Ansprüche 1-10, ferner umfassend Auswählen (1070) einer neuen RC basierend auf einem Bestimmen, dass die RC ungültig ist, wobei die neue RC aus einer Liste von in Frage kommenden bedienenden Zellen basierend auf einem oder mehreren der folgenden Kriterien ausgewählt wird:
nach dem Zufallsprinzip;
in Frage kommende bedienende Zelle mit dem niedrigsten oder dem höchsten Index; und
RS-Übertragungskonfiguration der in Frage kommenden bedienenden Zellen.

12. Verfahren nach Anspruch 11, wobei das Bestimmen, dass die RC ungültig ist, auf einem oder mehreren von Folgendem basiert:
Empfangen eines Deaktivierungsbefehls für die RC;
Ablauf eines mit der RC assoziierten Deaktivierungszeitgebers;
die RC bleibt für mindestens eine erste Dauer deaktiviert;
UE-Empfangssignalstärke oder -qualität für die RC ist für mindestens eine zweite Dauer niedriger als ein Schwellenwert;
ein oder mehrere UE-Funkverbindungsprobleme in der RC;
die Differenz zwischen dem UE-Empfangstakt von Signalen von der RC und von mindestens einer Hilfszelle überschreitet einen Schwellenwert;
die Differenz zwischen dem UE-Sendetakt von Signalen an die RC und an mindestens eine Hilfszelle überschreitet einen Schwellenwert; und
wenn eine Anzahl von Downlink-,DL-, oder Uplink-,UL-,Kanalfreiheitsbeurteilungsfehlschlägen, CCA-Fehlschlägen, durch die UE in der RC während einer dritten Dauer einen Schwellenwert überschreitet.

13. Verfahren nach Anspruch 12, ferner umfassend Unterlassen des Deaktivierens (1060) der RC bei Ablauf des mit der RC assoziierten Deaktivierungszeitgebers, wenn mindestens eine der Hilfszellen der RCG aktiviert ist.

14. Verfahren für einen Funkzugangsnetzwerkknoten, RAN-Knoten, der zum Kommunizieren mit einer Benutzereinrichtung, UE, über eine Mehrzahl von bedienenden Zellen konfiguriert ist, wobei das Verfahren Folgendes umfasst:
Bestimmen (1120) einer Referenzzellengruppe, RCG, für die UE, wobei die RCG eine der bedienenden Zellen als eine Referenzzelle, RC, und eine oder mehrere andere der bedienenden Zellen als Hilfszellen umfasst; und
Veranlassen (1140), dass ein erstes Referenzsignal, RS, in der RC, aber nicht in einer der Hilfszellen gesendet wird.

15. Benutzereinrichtung, UE, (120, 410, 505, 605, 910, 1212, 1300, 1706), die zum Kommunizieren mit einem Funkzugangsnetzwerk, RAN, (100, 399, 599, 699, 1204) über eine Mehrzahl von bedienenden Zellen konfiguriert ist, wobei die UE ferner zum Durchführen eines Verfahrens nach einem der Ansprüche 1-13 konfiguriert ist.

16. Funkzugangsnetzwerkknoten, RAN-Knoten, (105, 110, 115, 300, 350, 420, 430, 510, 520, 610, 620, 920, 1210, 1400, 1602, 1704), der zum Kommunizieren mit einer Benutzereinrichtung, UE, (120, 410, 505, 605, 910, 1212, 1300, 1706) über eine Mehrzahl von bedienenden Zellen konfiguriert ist, wobei der RAN-Knoten ferner zum Durchführen eines Verfahrens nach Anspruch 14 konfiguriert ist.

## Revendications

1. Procédé pour un équipement utilisateur, UE, configuré pour communiquer avec un réseau d'accès radio, RAN, via une pluralité de cellules de desserte, le procédé comprenant :
la détermination (1020) d'un groupe de cellules de référence, RCG, à partir de la pluralité de cellules de desserte, dans lequel le RCG inclut l'une des cellules de desserte comme cellule de référence, RC, et une ou plusieurs autres des cellules de desserte comme cellules auxiliaires ;
la réception (1040) d'un premier signal de référence, RS, depuis la RC, dans lequel le premier RS n'est pas reçu par l'UE depuis les une ou plusieurs cellules auxiliaires ; et
la réalisation (1050) d'une ou plusieurs opérations dans les une ou plusieurs cellules auxiliaires sur la base du premier RS reçu depuis la RC.

2. Procédé selon la revendication 1, dans lequel la réalisation (1050) des une ou plusieurs opérations comprend une ou plusieurs parmi :
la synchronisation (1051) avec les une ou plusieurs cellules auxiliaires sur la base du premier RS ;
la réalisation (1052) de mesures sur les une ou plusieurs cellules auxiliaires sur la base du premier RS ; et
la transmission et/ou la réception (1053) de signaux dans les une ou plusieurs cellules auxiliaires sur la base du premier RS.

3. Procédé selon la revendication 1 ou 2, dans lequel la détermination (1020) du RCG comprend une ou plusieurs parmi :
la réception (1021) d'au moins une partie d'une configuration pour le RCG depuis un nœud RAN qui fournit au moins l'une des cellules de desserte ; et
la détermination (1022) d'au moins une partie de la configuration pour le RCG sur la base d'une ou plusieurs parmi : une ou plusieurs capacités d'UE, et une ou plusieurs règles pour sélectionner des cellules de desserte comprenant un RCG.

4. Procédé selon la revendication 3, dans lequel l'au moins une partie reçue de la configuration inclut un ou plusieurs parmi :
un identifiant de la RC ;
des identifiants respectifs des une ou plusieurs cellules auxiliaires ;
des identifiants respectifs des cellules de desserte comprenant le RCG ; et
un identifiant du RCG.

5. Procédé selon l'une quelconque des revendications 3 et 4, comprenant en outre l'envoi (1010), au nœud RAN, d'une indication d'une ou plusieurs des capacités d'UE suivantes :
une différence maximale entre une fréquence porteuse d'une RC et des fréquences porteuses respectives de cellules auxiliaires d'un RCG ;
un nombre maximal de RCG configurés simultanément, Nmax ;
un nombre maximal de cellules de desserte par RCG configuré, Smax ;
un nombre maximal de cellules de desserte dans tous les RCG configurés, Stot ; et
une relation entre Nmax et Smax,
dans lequel l'au moins une partie reçue de la configuration est basée sur les capacités d'UE indiquées.

6. Procédé selon l'une quelconque des revendications 3 à 5, dans lequel les règles incluent un ou plusieurs des critères suivants pour sélectionner les cellules de desserte comprenant le RCG :
sur des fréquences porteuses adjacentes ;
sur des fréquences porteuses non adjacentes ;
présentant la même bande passante ;
présentant des bandes passantes différentes qui remplissent un ou plusieurs critères de bande passante ;
utilisant la même numérologie ou le même espacement de sous-porteuses, SCS ;
utilisant des numérologies différentes ou des SCS différents qui remplissent un ou plusieurs critères de numérologie ou de SCS ;
dans la même bande de fréquences ;
dans des bandes de fréquences différentes qui remplissent un ou plusieurs critères de bande ;
dans la même plage de fréquences, FR ;
dans des FR différentes qui remplissent un ou plusieurs critères de plage ;
fournies à partir du même emplacement physique ou étant quasi colocalisées, QCL ;
présentant la même taille ou des tailles similaires ;
une ou plusieurs relations de temporisation de cellules de desserte ;
une ou plusieurs relations entre des puissances de transmission de cellules de desserte ;
la prise en charge d'une gestion de faisceau commune ;
faisant partie du même groupe de cellules multi-connectivité ; et
utilisant le même mode de duplexage ou des modes de duplexage différents.

7. Procédé selon l'une quelconque des revendications 3 à 6, dans lequel les règles incluent un ou plusieurs des critères suivants pour sélectionner la RC pour le RCG :
une cellule de desserte par défaut ;
une cellule de desserte présentant une force maximale ou une qualité maximale de signal reçu d'UE ;
une cellule de desserte présentant une force ou une qualité de signal reçu d'UE supérieure à un seuil ;
une relation entre des fréquences porteuses ou des bandes de fréquences des cellules de desserte ; et
une configuration de transmission de RS des cellules de desserte.

8. Procédé selon la revendication 7, dans lequel la cellule de desserte par défaut est l'une parmi : une cellule primaire, PCell ; une cellule de groupe de cellules primaires secondaires, PSCell ; et une cellule spéciale, SpCell, avec une capacité pour recevoir un canal de commande de liaison montante physique, PUCCH.

9. Procédé selon l'une quelconque des revendications 3 à 8, comprenant en outre l'envoi (1030), au nœud RAN, d'informations identifiant l'au moins une partie de la configuration pour le RCG qui a été déterminée par l'UE.

10. Procédé selon la revendication 9, dans lequel les informations envoyées au nœud RAN incluent un ou plusieurs parmi :
un identifiant de la RC :
des identifiants respectifs des une ou plusieurs cellules auxiliaires ;
des identifiants respectifs des cellules de desserte comprenant le RCG ; et
un identifiant du RCG.

11. Procédé selon l'une quelconque des revendications 1 à 10, comprenant en outre la sélection (1070) d'une nouvelle RC sur la base de la détermination que la RC est non valide, dans lequel la nouvelle RC est sélectionnée dans une liste de cellules de desserte candidates sur la base d'un ou plusieurs des critères suivants :
aléatoirement ;
cellule de desserte candidate présentant l'indice le plus bas ou le plus haut ; et
configuration de transmission de RS des cellules de desserte candidates.

12. Procédé selon la revendication 11, dans lequel la détermination que la RC est non valide est basée sur un ou plusieurs parmi :
la réception d'une commande de désactivation pour la RC ;
l'expiration d'une minuterie de désactivation associée à la RC ;
le fait que la RC reste désactivée pendant au moins une première durée ;
une force ou une qualité de signal reçu d'UE pour la RC inférieure à un seuil pendant au moins une deuxième durée ;
un ou plusieurs problèmes de liaison radio d'UE sur la RC ;
une différence entre une temporisation de réception d'UE de signaux provenant de la RC et provenant d'au moins une cellule auxiliaire dépasse un seuil ;
une différence entre une temporisation de transmission d'UE de signaux à la RC et à au moins une cellule auxiliaire dépasse un seuil ; et
lorsqu'un nombre d'échecs d'évaluation de canal libre, CCA, de liaison descendante, DL, ou de liaison montante, UL, par l'UE dans la RC dépasse un seuil pendant une troisième durée.

13. Procédé selon la revendication 12, comprenant en outre, à l'expiration de la minuterie de désactivation associée à la RC, l'abstention de désactivation (1060) de la RC lorsqu'au moins une des cellules auxiliaires du RCG est activée.

14. Procédé pour un nœud de réseau d'accès radio, RAN, configuré pour communiquer avec un équipement utilisateur, UE, via une pluralité de cellules de desserte, le procédé comprenant :
la détermination (1120) d'un groupe de cellules de référence, RCG, pour l'UE, dans lequel le RCG comprend l'une des cellules de desserte comme cellule de référence, RC, et une ou plusieurs autres des cellules de desserte comme cellules auxiliaires ; et
le fait d'amener (1140) un premier signal de référence, RS, à être transmis dans la RC mais dans aucune des cellules auxiliaires.

15. Equipement utilisateur, UE, (120, 410, 505, 605, 910, 1212, 1300, 1706) configuré pour communiquer avec un nœud d'accès radio, RAN, (100, 399, 599, 699, 1204) via une pluralité de cellules de desserte, l'UE étant en outre configuré pour réaliser un procédé selon l'une quelconque des revendications 1 à 13.

16. Nœud de réseau d'accès radio, RAN, (105, 110, 115, 300, 350, 420, 430, 510, 520, 610, 620, 920, 1210, 1400, 1602, 1704) configuré pour communiquer avec un équipement utilisateur, UE, (120, 410, 505, 605, 910, 1212, 1300, 1706) via une pluralité de cellules de desserte, le nœud RAN étant en outre configuré pour réaliser un procédé selon la revendication 14.
